(19) Europäisches Patentamt
European Patent Office
Office européen des brevets

(11) EP 4 590 041 A1

(12) EUROPEAN PATENT APPLICATION
published in accordance with Art. 153(4) EPC

(43) Date of publication:
**23.07.2025 Bulletin 2025/30**

(21) Application number: **22959148.2**

(22) Date of filing: **22.09.2022**

(51) International Patent Classification (IPC):
***H04W 72/04*** *(2023.01)* ***H04W 72/12*** *(2023.01)*
***H04W 80/12*** *(2009.01)* ***H04W 80/08*** *(2009.01)*
***G06N 3/00*** *(2023.01)*

(52) Cooperative Patent Classification (CPC):
**G06N 3/00; H04W 72/04; H04W 72/12; H04W 80/08; H04W 80/12**

(86) International application number:
**PCT/CN2022/120568**

(87) International publication number:
**WO 2024/060139 (28.03.2024 Gazette 2024/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
- **WANG, Jian**
  **Shenzhen, Guangdong 518129 (CN)**
- **QIAO, Yunfei**
  **Shenzhen, Guangdong 518129 (CN)**
- **LI, Rong**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

# (54) COMMUNICATION METHOD AND DEVICE, STORAGE MEDIUM, AND PROGRAM PRODUCT

(57) This application discloses a communication method and apparatus, a storage medium, and a program product. The method includes: A first node sends first indication information and/or second indication information to a second node, where the first indication information indicates dataset state information, and the second indication information indicates model state information; the second node determines a communication scheme and a communication resource based on the first indication information and/or the second indication information; and the second node sends third indication information to the first node, where the third indication information indicates the communication scheme and the communication resource, and the communication scheme and the communication resource are determined based on the first indication information and/or the second indication information. According to the solution of this application, the dataset state information and/or the model state information of the first node are obtained, to determine the communication scheme and the communication resource, and indicate the communication scheme and the communication resource to the first node. This improves communication reliability.

First node
Second node
S1101: First indication information and/or second indication information (the first indication information indicates dataset state information, and the second indication information indicates model state information)
S1102: Determine a communication scheme and a communication resource based on the first indication information and/or the second indication information
S1103: Third indication information (indicating the communication scheme and the communication resource)
S1104: Generate an artificial intelligence traffic data packet based on the third indication information
S1105: Send the artificial intelligence traffic data packet based on the third indication information
FIG. 11

EP 4 590 041 A1

## Description

### TECHNICAL FIELD

This application relates to the field of communication technologies, and in particular, to a communication method and apparatus, a storage medium, and a program product.

### BACKGROUND

Information transmitted between a distributed node and a central node is collectively referred to as artificial intelligence traffic (AI traffic) data. When distributed learning is performed at an L1/L2 protocol layer such as a physical (physical, PHY) layer or a medium access control (medium access control, MAC) layer of a wireless communication system, the artificial intelligence traffic data is generated at the corresponding L1/L2 protocol layer, and is different from traffic data streams delivered by an application layer.

For data streams at an upper layer such as an application layer/a network layer, a transmission mode of a new radio (new radio, NR) standard is described as follows: A quality of service (quality of service, QoS) flow is constructed, mapped level by level to layers such as a service data adaptation protocol (service data adaption protocol, SDAP)/packet data convergence protocol (packet data convergence protocol, PDCP)/radio link control (radio link control, RLC)/MAC/-PHY layer in a protocol stack, and finally sent through a radio frequency air interface. However, this transmission mode provides only a complete protocol stack processing process for upper-layer data, and cannot be used for data streams generated at lower protocol layers such as a PHY/MAC layer.

In view of this, how to transmit the artificial intelligence traffic data generated at the PHY/MAC layer is an urgent problem to be resolved.

### SUMMARY

This application provides a communication method and apparatus, a storage medium, and a program product, to transmit artificial intelligence traffic data generated at a PHY/MAC layer.

According to a first aspect, a communication method is provided. The method includes: sending first indication information and/or second indication information, where the first indication information indicates dataset state information, and the second indication information indicates model state information; and receiving third indication information, where the third indication information indicates a communication scheme and a communication resource, and the communication scheme and the communication resource are determined based on the first indication information and/or the second indication information. The method may be performed by a first apparatus. The first apparatus may be a communication device, or may be a component such as a chip (a system) in the communication device. The first apparatus may be a first node in a network system.

In this aspect, the first node reports the dataset state information and/or the model state information, so that the second node determines the communication scheme and the communication resource based on the dataset state information and/or the model state information reported by the first node, and indicates the communication scheme and the communication resource to the first node. In this way, transmission of artificial intelligence traffic data generated at a PHY/MAC layer can be implemented.

In a possible implementation, the dataset state information includes at least one of the following information: a data type, a sampling frequency, sampling location information, a sample timestamp, a quantity of samples, and sample precision.

In this implementation, the dataset state information indicates how the first node obtains input data of a model. The dataset state information affects determining of a communication scheme and a communication resource of an artificial intelligence data packet.

In another possible implementation, the model state information includes at least one of the following information: a model type, a model identifier, a submodel order, a model version number, a model description, a model update timestamp, model update location information, model precision, and model performance.

In this implementation, the model state information is a description of a model used by the first node. The model state information affects determining of a communication scheme and a communication resource of an artificial intelligence data packet.

In still another possible implementation, the communication scheme is determined based on at least two of the first indication information, the second indication information, and channel state information.

In this implementation, a channel state between the first node and the second node also affects the communication scheme used by the first node. Therefore, the communication scheme is determined based on at least two of the first indication information, the second indication information, and the channel state information. This improves accuracy of the communication scheme.

In still another possible implementation, the communication scheme includes at least one of the following schemes: a quantization scheme, a source coding scheme, a modulation and coding scheme, and a joint source-channel coding scheme.

In still another possible implementation, the method further includes: reporting a size of an artificial intelligence traffic data packet. The communication resource is determined based on at least two of the size of the artificial intelligence traffic data packet, the dataset state information, and the model state information.

In this implementation, the communication resource is associated with the at least two of the size of the artificial intelligence traffic data packet, the dataset state information, and the model state information, and the communication resource is determined based on the at least two of the size of the artificial intelligence traffic data packet, the dataset state information, and the model state information. This improves accuracy of the determined communication resource.

In still another possible implementation, the method further includes: generating the artificial intelligence traffic data packet based on the third indication information; and sending the artificial intelligence traffic data packet based on the third indication information.

In this implementation, the first node generates the artificial intelligence traffic data packet, and may send the artificial intelligence traffic data packet to the second node or a third node.

In still another possible implementation, the method further includes: receiving the artificial intelligence traffic data packet based on the third indication information.

In this implementation, after determining the third indication information, the second node may also send the artificial intelligence traffic data packet to the first node based on the third indication information. Alternatively, the second node indicates the third node to send the artificial intelligence traffic data packet to the first node.

In still another possible implementation, the artificial intelligence traffic data packet is communicated through a physical learning channel.

In this implementation, the physical learning channel is a new physical channel defined for the artificial intelligence traffic data at the PHY/MAC layer.

In still another possible implementation, communication through the physical learning channel includes at least one of the following processing operations: quantization, and source coding; or communication through the physical learning channel includes at least one of the following processing operations: quantization, and joint source-channel coding; or communication through the physical learning channel includes the following processing operation: real-number or complex-number processing.

In this implementation, the artificial intelligence traffic data is usually in a form of a real number or a complex number, and processing such as bit-level channel coding cannot be directly performed. Therefore, operations such as quantization, source coding, joint source-channel coding, and real-number or complex-number processing need to be added to a data processing procedure of the physical learning channel.

In still another possible implementation, the artificial intelligence traffic data packet includes a packet header and a payload, and the payload includes at least one of the following data: a parameter or a gradient of a machine learning model, an inference result, an intermediate result of inference to a split layer, a gradient reversely transferred to the split layer, and logits.

In still another possible implementation, the packet header includes at least one of the following: content indication information, content description information, a compression mode, and a packing mode.

In this implementation, the packet header includes at least one of the foregoing information, so that a receiving end can accurately unpack the packet based on the information in the packet header.

According to a second aspect, a communication method is provided. The method includes: receiving first indication information and/or second indication information, where the first indication information indicates dataset state information, and the second indication information indicates model state information; determining a communication scheme and a communication resource based on the first indication information and/or the second indication information; and sending third indication information, where the third indication information indicates the communication scheme and the communication resource. The method may be performed by a second apparatus. The second apparatus may be a communication device, or may be a component such as a chip (a system) in the communication device. The second apparatus may be a second node in a network system.

In this aspect, the second node obtains the dataset state information and/or the model state information reported by the first node, to determine the communication scheme and the communication resource, and indicate the communication scheme and the communication resource to the first node. In this way, transmission of artificial intelligence traffic data generated at a PHY/MAC layer can be implemented.

In a possible implementation, the dataset state information includes at least one of the following information: a data type, a sampling frequency, sampling location information, a sample timestamp, a quantity of samples, and sample precision.

In another possible implementation, the model state information includes at least one of the following information:

a model type, a model identifier, a submodel order, a model version number, a model description, a model update timestamp, model update location information, model precision, and model performance.

In still another possible implementation, the communication scheme is determined based on at least two of the first indication information, the second indication information, and channel state information.

In still another possible implementation, the communication scheme includes at least one of the following schemes: a quantization scheme, a source coding scheme, a modulation and coding scheme, and a joint source-channel coding scheme.

In still another possible implementation, the determining a communication resource based on the first indication information and/or the second indication information includes: obtaining a size of an artificial intelligence traffic data packet; and determining the communication resource based on at least two of the size of the artificial intelligence traffic data packet, the first indication information, and the second indication information.

In still another possible implementation, the obtaining a size of an artificial intelligence traffic data packet includes: determining the size of the artificial intelligence traffic data packet based on a correspondence between a data packet size and at least one of a task type and a service type; or receiving the reported size of the artificial intelligence traffic data packet.

In still another possible implementation, the method further includes: receiving the artificial intelligence traffic data packet sent based on the third indication information.

In still another possible implementation, the method further includes: generating the artificial intelligence traffic data packet based on the third indication information; and sending the artificial intelligence traffic data packet based on the third indication information.

In still another possible implementation, the method further includes: indicating a third node to send the artificial intelligence traffic data packet based on the third indication information.

In still another possible implementation, the artificial intelligence traffic data packet is communicated through a physical learning channel.

In still another possible implementation, communication through the physical learning channel includes at least one of the following processing operations: quantization, and source coding; or communication through the physical learning channel includes at least one of the following processing operations: quantization, and joint source-channel coding; or communication through the physical learning channel includes the following processing operation: real-number or complex-number processing.

In still another possible implementation, the artificial intelligence traffic data packet includes a packet header and a payload, and the payload includes at least one of the following data: a parameter or a gradient of a machine learning model, an inference result, an intermediate result of inference to a split layer, a gradient reversely transferred to the split layer, and logits.

In still another possible implementation, the packet header includes at least one of the following: content indication information, content description information, a compression mode, and a packing mode.

According to a third aspect, a communication method is provided. The method includes: obtaining artificial intelligence traffic data generated at a physical PHY layer and/or a medium access control MAC layer; and sending the artificial intelligence traffic data through a first radio bearer. The method may be performed by a first apparatus. The first apparatus may be a communication device, or may be a component such as a chip (a system) in the communication device. The first apparatus may be a first node in a network system.

In this aspect, a new protocol stack processing procedure is defined. After the artificial intelligence traffic data generated at the PHY/MAC layer is input to the first radio bearer, the artificial intelligence traffic data may be sent to a second node through the first radio bearer, so that communication of the artificial intelligence traffic data generated at the PHY/MAC layer is implemented.

In a possible implementation, the sending the artificial intelligence traffic data through a first radio bearer includes: processing the artificial intelligence traffic data at at least one of the following protocol layers: a packet data convergence protocol PDCP layer, a radio link control RLC layer, the MAC layer, and the PHY layer; and sending processed artificial intelligence traffic data.

In another possible implementation, the first radio bearer is a learning radio bearer or a first data radio bearer.

In still another possible implementation, the method is applied to a terminal. The method further includes: receiving first signaling, where the first signaling indicates to configure the first radio bearer.

In still another possible implementation, the method is applied to a network device. The method further includes: sending first signaling, where the first signaling indicates to configure the first radio bearer.

In this implementation, the first radio bearer is a newly defined learning radio bearer or a newly defined first data radio bearer, and the first radio bearer may be configured based on the first signaling.

According to a fourth aspect, a communication method is provided. The method includes: receiving artificial intelligence traffic data through a first radio bearer; and outputting the artificial intelligence traffic data to a physical PHY layer and/or a medium access control MAC layer. The method may be performed by a second apparatus. The second apparatus may be a communication device, or may be a component such as a chip (a system) in the communication device. The second apparatus may be a second node in a network system.

In this aspect, a new protocol stack processing procedure is defined. After the artificial intelligence traffic data is received through the first radio bearer, the artificial intelligence traffic data is output to the PHY/MAC layer, so that communication of the artificial intelligence traffic data generated at the PHY/MAC layer is implemented.

In a possible implementation, the outputting the artificial intelligence traffic data to a physical PHY layer and/or a medium access control MAC layer includes: processing the artificial intelligence traffic data at at least one of the following protocol layers: the PHY layer, the MAC layer, a radio link control RLC layer, and a packet data convergence protocol PDCP layer; and outputting processed artificial intelligence traffic data to the PHY layer and/or the MAC layer.

In another possible implementation, the first radio bearer is a learning radio bearer or a first data radio bearer.

In still another possible implementation, the method is applied to a network device. The method further includes: sending first signaling, where the first signaling indicates to configure the first radio bearer.

In still another possible implementation, the method is applied to a terminal. The method further includes: receiving first signaling, where the first signaling indicates to configure the first radio bearer.

In this implementation, the first radio bearer is a newly defined learning radio bearer or a newly defined first data radio bearer, and the first radio bearer may be configured based on the first signaling.

According to a fifth aspect, a communication apparatus is provided, to implement the communication method according to the first aspect. For example, the communication apparatus may be a chip or a first node. The foregoing method may be implemented by software, hardware, or hardware executing corresponding software.

The communication apparatus includes a transceiver unit and a processing unit, where the transceiver unit is configured to send first indication information and/or second indication information, where the first indication information indicates dataset state information, and the second indication information indicates model state information; and the transceiver unit is further configured to receive third indication information, where the third indication information indicates a communication scheme and a communication resource, and the communication scheme and the communication resource are determined based on the first indication information and/or the second indication information.

In a possible implementation, the dataset state information includes at least one of the following information: a data type, a sampling frequency, sampling location information, a sample timestamp, a quantity of samples, and sample precision.

In another possible implementation, the model state information includes at least one of the following information: a model type, a model identifier, a submodel order, a model version number, a model description, a model update timestamp, model update location information, model precision, and model performance.

In still another possible implementation, the communication scheme is determined based on at least two of the first indication information, the second indication information, and channel state information.

In still another possible implementation, the communication scheme includes at least one of the following schemes: a quantization scheme, a source coding scheme, a modulation and coding scheme, and a joint source-channel coding scheme.

In still another possible implementation, the transceiver unit is further configured to report a size of an artificial intelligence traffic data packet. The communication resource is determined based on at least two of the size of the artificial intelligence traffic data packet, the dataset state information, and the model state information.

In still another possible implementation, the processing unit is configured to generate the artificial intelligence traffic data packet based on the third indication information; and the transceiver unit is further configured to send the artificial intelligence traffic data packet based on the third indication information.

In still another possible implementation, the transceiver unit is further configured to receive the artificial intelligence traffic data packet based on the third indication information.

In still another possible implementation, the artificial intelligence traffic data packet is communicated through a physical learning channel.

In still another possible implementation, communication through the physical learning channel includes at least one of the following processing operations: quantization, and source coding; or communication through the physical learning channel includes at least one of the following processing operations: quantization, and joint source-channel coding; or communication through the physical learning channel includes the following processing operation: real-number or complex-number processing.

In still another possible implementation, the artificial intelligence traffic data packet includes a packet header and a payload, and the payload includes at least one of the following data: a parameter or a gradient of a machine learning model, an inference result, an intermediate result of inference to a split layer, a gradient reversely transferred to the split layer, and logits.

In still another possible implementation, the packet header includes at least one of the following: content indication information, content description information, a compression mode, and a packing mode.

According to a sixth aspect, a communication apparatus is provided, to implement the communication method according to the second aspect. For example, the communication apparatus may be a chip or a second node. The foregoing method may be implemented by software, hardware, or hardware executing corresponding software.

The communication apparatus includes a transceiver unit and a processing unit, where the transceiver unit is configured to receive first indication information and/or second indication information, where the first indication information indicates dataset state information, and the second indication information indicates model state information; the processing unit is configured to determine a communication scheme and a communication resource based on the first indication information and/or the second indication information; and the transceiver unit is further configured to send third indication information, where the third indication information indicates the communication scheme and the communication resource.

In a possible implementation, the dataset state information includes at least one of the following information: a data type, a sampling frequency, sampling location information, a sample timestamp, a quantity of samples, and sample precision.

In another possible implementation, the model state information includes at least one of the following information: a model type, a model identifier, a submodel order, a model version number, a model description, a model update timestamp, model update location information, model precision, and model performance.

In still another possible implementation, the communication scheme is determined based on at least two of the first indication information, the second indication information, and channel state information.

In still another possible implementation, the communication scheme includes at least one of the following schemes: a quantization scheme, a source coding scheme, a modulation and coding scheme, and a joint source-channel coding scheme.

In still another possible implementation, the processing unit is further configured to obtain a size of an artificial intelligence traffic data packet; and the processing unit is further configured to determine the communication resource based on at least two of the size of the artificial intelligence traffic data packet, the first indication information, and the second indication information.

In still another possible implementation, the processing unit is further configured to determine the size of the artificial intelligence traffic data packet based on a correspondence between a data packet size and at least one of a task type and a service type; or the transceiver unit is further configured to receive the reported size of the artificial intelligence traffic data packet.

In still another possible implementation, the transceiver unit is further configured to receive the artificial intelligence traffic data packet sent based on the third indication information.

In still another possible implementation, the processing unit is further configured to generate the artificial intelligence traffic data packet based on the third indication information; and the transceiver unit is further configured to send the artificial intelligence traffic data packet based on the third indication information.

In still another possible implementation, the processing unit is further configured to indicate a third node to send the artificial intelligence traffic data packet based on the third indication information.

In still another possible implementation, the artificial intelligence traffic data packet is communicated through a physical learning channel.

In still another possible implementation, communication through the physical learning channel includes at least one of the following processing operations: quantization, and source coding; or communication through the physical learning channel includes at least one of the following processing operations: quantization, and joint source-channel coding; or communication through the physical learning channel includes the following processing operation: real-number or complex-number processing.

In still another possible implementation, the artificial intelligence traffic data packet includes a packet header and a payload, and the payload includes at least one of the following data: a parameter or a gradient of a machine learning model, an inference result, an intermediate result of inference to a split layer, a gradient reversely transferred to the split layer, and logits.

In still another possible implementation, the packet header includes at least one of the following: content indication information, content description information, a compression mode, and a packing mode.

According to a seventh aspect, a communication apparatus is provided, to implement the communication method according to the third aspect. For example, the communication apparatus may be a chip or a first node. The foregoing method may be implemented by software, hardware, or hardware executing corresponding software.

The communication apparatus includes a transceiver unit and a processing unit, where the processing unit is configured to obtain artificial intelligence traffic data generated at a physical PHY layer and/or a medium access control MAC layer; and the transceiver unit is configured to send the artificial intelligence traffic data through a first radio bearer.

In a possible implementation, the processing unit is configured to process the artificial intelligence traffic data at at least one of the following protocol layers: a packet data convergence protocol PDCP layer, a radio link control RLC layer, the MAC layer, and the PHY layer; and the transceiver unit is further configured to send processed artificial intelligence traffic data.

In another possible implementation, the first radio bearer is a learning radio bearer or a first data radio bearer.

In still another possible implementation, the communication apparatus is a terminal, and the transceiver unit is further configured to receive first signaling, where the first signaling indicates to configure the first radio bearer.

In still another possible implementation, the communication apparatus is a network device, and the transceiver unit is further configured to send first signaling, where the first signaling indicates to configure the first radio bearer.

According to an eighth aspect, a communication apparatus is provided, to implement the communication method according to the fourth aspect. For example, the communication apparatus may be a chip or a second node. The foregoing method may be implemented by software, hardware, or hardware executing corresponding software.

The communication apparatus includes a transceiver unit and a processing unit, where the transceiver unit is configured to receive artificial intelligence traffic data through a first radio bearer; and the processing unit is configured to output the artificial intelligence traffic data to a physical PHY layer and/or a medium access control MAC layer.

In a possible implementation, the processing unit is configured to process the artificial intelligence traffic data at at least one of the following protocol layers: the PHY layer, the MAC layer, a radio link control RLC layer, and a packet data convergence protocol PDCP layer; and the processing unit is further configured to transmit processed artificial intelligence traffic data to the PHY layer and/or the MAC layer.

In another possible implementation, the first radio bearer is a learning radio bearer or a first data radio bearer.

In still another possible implementation, the communication apparatus is a network device, and the transceiver unit is further configured to send first signaling, where the first signaling indicates to configure the first radio bearer.

In still another possible implementation, the communication apparatus is a terminal, and the transceiver unit is further configured to receive first signaling, where the first signaling indicates to configure the first radio bearer.

For example, the processing unit may be a processor, and the transceiver unit may be a transceiver or a communication interface, or may include a receiving unit and a sending unit. The receiving unit may be a receiver machine, a receiver, or an input interface, and the sending unit may be a transmitter machine, a transmitter, or an output interface. Optionally, a storage unit may be further included, and the storage unit may be a memory. It may be understood that, if the communication apparatus is a chip disposed in a device, the transceiver unit may be an input/output interface of the chip, for example, an input/output circuit or a pin.

According to a ninth aspect, a communication apparatus is provided, including a processor, configured to perform the method according to any one of the first aspect or the implementations of the first aspect.

According to a tenth aspect, a communication apparatus is provided, including a processor, configured to perform the method according to any one of the second aspect or the implementations of the second aspect.

According to an eleventh aspect, a communication apparatus is provided, including a processor, configured to perform the method according to any one of the third aspect or the implementations of the third aspect.

According to a twelfth aspect, a communication apparatus is provided, including a processor, configured to perform the method according to any one of the fourth aspect or the implementations of the fourth aspect.

According to a thirteenth aspect, a communication apparatus is provided, including a processor, a memory, and instructions that are stored in the memory and that can be run on the processor. When the instructions are run, the communication apparatus is enabled to perform the method according to any one of the first aspect or the implementations of the first aspect.

According to a fourteenth aspect, a communication apparatus is provided, including a processor, a memory, and instructions that are stored in the memory and that can be run on the processor. When the instructions are run, the communication apparatus is enabled to perform the method according to any one of the second aspect or the implementations of the second aspect.

According to a fifteenth aspect, a communication apparatus is provided, including a processor, a memory, and instructions that are stored in the memory and that can be run on the processor. When the instructions are run, the communication apparatus is enabled to perform the method according to any one of the third aspect or the implementations of the third aspect.

According to a sixteenth aspect, a communication apparatus is provided, including a processor, a memory, and instructions that are stored in the memory and that can be run on the processor. When the instructions are run, the communication apparatus is enabled to perform the method according to any one of the fourth aspect or the implementations of the fourth aspect.

According to a seventeenth aspect, a communication system is provided. The communication system includes the communication apparatus according to the fifth aspect and the communication apparatus according to the sixth aspect.

According to an eighteenth aspect, a communication system is provided. The communication system includes the communication apparatus according to the seventh aspect and the communication apparatus according to the eighth aspect.

According to a nineteenth aspect, a computer-readable storage medium is provided. The computer-readable storage medium stores a computer program or instructions. When a computer executes the computer program or the instructions, the methods in the foregoing aspects are implemented.

According to a twentieth aspect, a computer program product including instructions is provided. When the instructions are run on a communication apparatus, the communication apparatus is enabled to perform the methods in the foregoing aspects.

BRIEF DESCRIPTION OF DRAWINGS

FIG. 1 is a diagram of a communication system according to this application;
FIG. 2 is a diagram of a communication system in a specific scenario according to an embodiment of this application;
FIG. 3 is a diagram of another communication system according to this application;
FIG. 4 is a diagram of a communication system in another specific scenario according to an embodiment of this application;
FIG. 5 is a diagram of a federated learning architecture according to an embodiment of this application;
FIG. 6 is a diagram of a split learning architecture according to an embodiment of this application;
FIG. 7 is a diagram of a federated distillation architecture according to an embodiment of this application;
FIG. 8 is a diagram of transmission of application-layer data according to a conventional technology;
FIG. 9 is a diagram of UCI/DCI communication according to an embodiment of this application;
FIG. 10 is a diagram of a data processing procedure of an existing physical channel;
FIG. 11 is a schematic flowchart of a communication method according to an embodiment of this application;
FIG. 12 is a diagram of communication of artificial intelligence traffic data according to an embodiment of this application;
FIG. 13a is a diagram of a data processing procedure of a physical learning channel according to an embodiment of this application;
FIG. 13b is a diagram of another data processing procedure of a physical learning channel according to an embodiment of this application;
FIG. 13c is a diagram of still another data processing procedure of a physical learning channel according to an embodiment of this application;
FIG. 14 is a schematic flowchart of another communication method according to an embodiment of this application;
FIG. 15 is a schematic flowchart of still another communication method according to an embodiment of this application;
FIG. 16 is a diagram of a protocol stack processing procedure of artificial intelligence traffic data according to an embodiment of this application;
FIG. 17 is a diagram of a structure of a communication apparatus according to an embodiment of this application;
FIG. 18 is a diagram of a simplified structure of a terminal according to an embodiment of this application; and
FIG. 19 is a diagram of a simplified structure of a network device according to an embodiment of this application.

## DESCRIPTION OF EMBODIMENTS

This application is applicable to a fifth generation (5th generation, 5G) mobile communication system, a sixth generation (6th generation, 6G) mobile communication system, a future evolved mobile communication system, a satellite communication system, a short-range communication system, another communication system, or the like. This is not limited in this application.

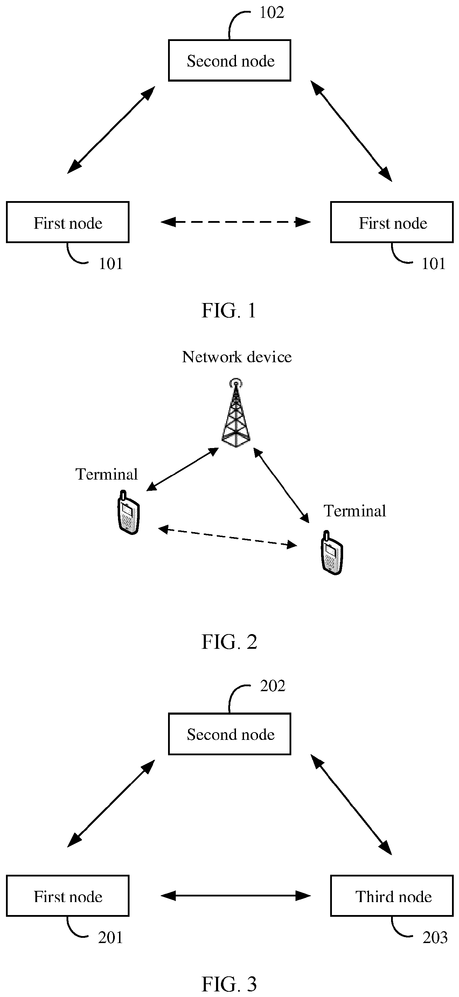

FIG. 1 is a diagram of a communication system according to this application. The communication system includes one or more first nodes 101 (two first nodes shown in the figure) and one or more second nodes 102 (one second node shown in the figure). The communication system may be used in a scenario such as a cellular network. For example, the first node 101 may be a distributed node such as a terminal or a network device, and the second node 102 may be a central node such as a network device or a terminal.

FIG. 2 is a diagram of a communication system in a specific scenario according to an embodiment of this application. The first node 101 is a terminal, and the second node 102 is a network device. The first node 101 sends first indication information and/or second indication information to the second node 102, where the first indication information indicates dataset state information, and the second indication information indicates model state information. The second node 102 determines a communication scheme and a communication resource based on the first indication information and/or the second indication information; and the second node 102 sends third indication information to the first node 101, where the third indication information indicates the communication scheme and the communication resource, and the communication scheme and the communication resource are determined based on the first indication information and/or the second indication information. The first node 101 may perform communication of an artificial intelligence traffic data packet with the second node 102 based on the communication scheme and the communication resource that are indicated by the third indication information.

FIG. 3 is a diagram of another communication system according to this application. The communication system includes a first node 201, a second node 202, and a third node 203. The communication system may be used in scenarios such as vehicle-to-everything (vehicle-to-everything, V2X) and device-to-device (device-to-device, D2D) communication. For example, the first node 201 and the third node 203 may be distributed nodes such as terminals, and the second node 202 may be a central node such as a network device. The first node 201 sends first indication information and/or second indication information to the second node 202, where the first indication information indicates dataset state information, and the second indication information indicates model state information. The second node 202 determines a communication scheme and a communication resource based on the first indication information and/or the second indication information; and the second node 202 sends third indication information to the first node 201, where the third indication information indicates the communication scheme and the communication resource, and the communication scheme and the communication resource are determined based on the first indication information and/or the second indication information. The first node 201 may perform communication of an artificial intelligence traffic data packet with the third node 203 based on the communication scheme and the communication resource that are indicated by the third indication information.

In the communication system shown in FIG. 2, the terminal is a device having wireless receiving and sending functions, and may be deployed on land (including indoor or outdoor), and may be handheld, wearable, or vehicle-mounted; or may be deployed on a water surface, for example, on a ship; or may be deployed in the air, for example, on an airplane, a balloon, or a satellite. The terminal may be a mobile phone (mobile phone), a tablet computer (pad), a computer having wireless receiving and sending functions, a wearable device, an uncrewed aerial vehicle, a helicopter, an airplane, a ship, a robot, a mechanical arm, a smart home device, a virtual reality (virtual reality, VR) terminal, an augmented reality (augmented reality, AR) terminal, a wireless terminal in industrial control (industrial control), a wireless terminal in self-driving (self-driving), a vehicle, a functional module in a vehicle, a wireless terminal in remote medical (remote medical), a wireless terminal in a smart grid (smart grid), a wireless terminal in transportation security (transportation safety), a wireless terminal (for example, a street light) in a smart city (smart city), a wireless terminal in a smart home (smart home), or the like. An application scenario is not limited in embodiments of this application. The terminal sometimes may also be referred to as user equipment (user equipment, LTE), an access terminal, a LTE unit, a mobile station, a remote station, a remote terminal, a mobile device, a terminal (terminal), a wireless communication device, a UE agent, a UE apparatus, or the like. A specific technology and a specific device form that are used by the terminal are not limited in embodiments of this application.

The network device may be any device having wireless receiving and sending functions, including but not limited to a base station (NodeB), an evolved NodeB (eNodeB), a base station in a 5G communication system, a base station or an access network device in a future communication system, an access node in a Wi-Fi system, a wireless relay node, a wireless backhaul node, and the like. Alternatively, the network device may be a radio controller in a cloud radio access network (cloud radio access network, CRAN) scenario. Alternatively, the network device may be a small cell, a transmission node (transmission reference point, TRP), or the like. A specific technology and a specific device form that are used by the network device are not limited in embodiments of this application.

The communication system may further include a core network device (not shown in the figure). Main functions of the core network device are to provide a user connection and user management, complete service carrying, and act as a bearer network to provide an interface to an external network. Establishment of the user connection includes functions such as mobility management (mobility management, MM), calling management (calling management, CM), switching/routing, and recording notification (completing a connection to an intelligent network peripheral device with reference to an intelligent network service). The user management includes management of a user description, quality of service (quality of service, QoS), user communication accounting (accounting), a virtual home environment (virtual home environment, VHE) (for example, providing the virtual home environment through a dialogue with an intelligent network platform), and security (an authentication center provides corresponding security measures, including security management for a mobile service and security processing for external network access). The bearer connection includes connections to an external public switched telephone network (public switched telephone network, PSTN), an external circuit data network and packet data network, an internet (internet), an enterprise intranet (intranet), a short message service (short message service, SMS) server of a mobile network, and the like. Basic services that can be provided by the core network device include mobile office, e-commerce, communication, an entertainment service, a travel and location-based service, a remote sensing service (telemetry), a simple message transfer service (monitoring control), and the like.

Optionally, in embodiments of this application, the terminal or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android (Android) operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be a terminal or a network device, or may be a functional module that is in the terminal or the network device and that can invoke the program and execute the program.

In other words, a related function of the terminal or the network device in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, a software function running on dedicated hardware, a combination of hardware and software, or a virtualized function instantiated on a platform (for example, a cloud platform).

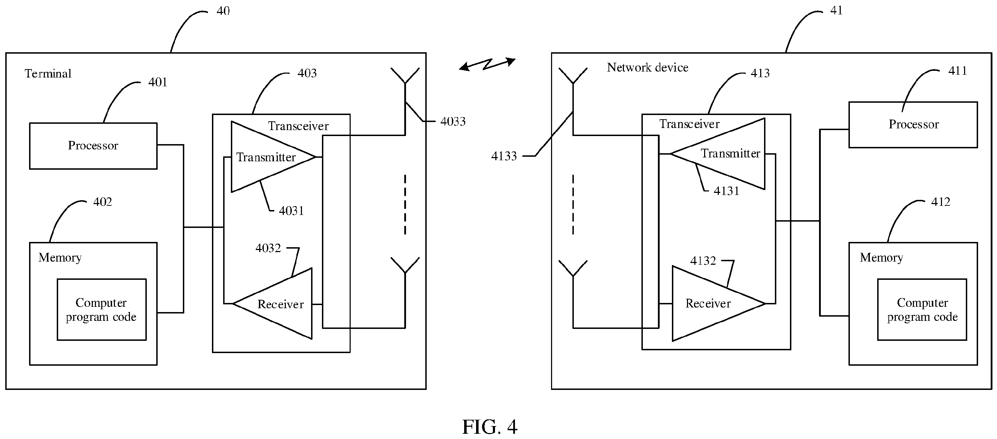

Communication between the network device and the terminal in the communication system shown in FIG. 2 may alternatively be represented in another form. FIG. 4 is a diagram of a communication system in another specific scenario according to an embodiment of this application. A terminal 40 includes a processor 401, a memory 402, and a transceiver 403. The transceiver 403 includes a transmitter 4031, a receiver 4032, and an antenna 4033. A network device 41 includes a processor 411, a memory 412, and a transceiver 413. The transceiver 413 includes a transmitter 4131, a receiver 4132, and an antenna 4133. The receiver 4032 may be configured to receive transmission control information through the antenna 4033, and the transmitter 4031 may be configured to send transmission feedback information to the network device 41 through the antenna 4033. The transmitter 4131 may be configured to send transmission control information to the terminal 40 through the antenna 4133, and the receiver 4132 may be configured to receive, through the antenna 4133, transmission feedback information sent by the terminal 40.

The processor 401/The processor 411 may be a CPU, a microprocessor, an application-specific integrated circuit (application-specific integrated circuit, ASIC), or one or more integrated circuits configured to control program execution in the solution of this application.

The memory 402/The memory 412 may be an apparatus having a storage function. For example, the memory may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory may independently exist and may be connected to the processor through a communication line. The memory may alternatively be integrated with the processor.

The memory 402/The memory 412 may be configured to store computer-executable instructions for executing the solution of this application, and the processor 401/the processor 411 may be configured to control execution. The processor 401/The processor 411 may be configured to execute the computer-executable instructions stored in the memory 402/the memory 412, to implement the information transmission method provided in embodiments of this application.

Alternatively, in embodiments of this application, the processor 401/the processor 411 may perform processing-related functions in the information transmission method provided in the following embodiments of this application.

The computer-executable instructions in embodiments of this application may also be referred to as application code. This is not specifically limited in embodiments of this application.

It should be noted that the terms "system" and "network" in embodiments of this application may be used interchangeably.

With advent of a big data era, each device generates massive raw data in various forms every day. The data is generated in a form of an "island" and exists in every corner of the world. Conventional centralized learning requires that each edge device uniformly transmits local data to a central server, and then the collected data is used for model training and learning. However, this architecture is gradually restricted by the following factors with development of times:

(1) Edge devices are widely distributed in various regions and corners of the world. These devices will continuously generate and accumulate massive amounts of raw data at a rapid speed. If the central end needs to collect raw data from all edge devices, huge communication losses and computing power requirements are inevitably caused.

(2) As actual scenarios in real life become more complex, more learning tasks require that the edge device can decide and provide feedback in a timely manner and effectively. In conventional centralized learning, because a large amount of data is uploaded, a large latency is inevitably caused. Consequently, centralized learning cannot meet a real-time requirement of an actual task scenario.

(3) In consideration of problems such as industry competition, user privacy security, and complex administrative procedures, centralized integration of data faces increasing resistance and constraints. Therefore, for system deployment, data tends to be locally stored, and local computing of a model is completed by the edge device on its own.

Therefore, how to design a machine learning framework while meeting data privacy, security, and regulatory requirements to enable artificial intelligence (artificial intelligence, AI) systems to jointly use their data more efficiently and accurately becomes an important issue in current development of artificial intelligence.

Currently, the following solutions are provided.

Federated learning:

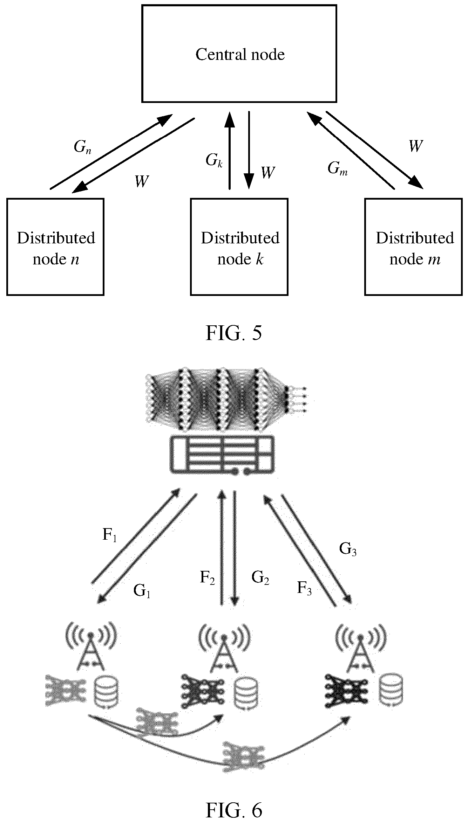

A concept of federated learning (federated learning, FL) effectively solves current difficulties faced by development of artificial intelligence. On the premise that user data privacy and security are fully ensured, federated learning enables edge devices (also referred to as "distributed nodes") and central servers (also referred to as "central nodes") to collaborate to efficiently complete model learning tasks. FIG. 5 is a diagram of a federated learning architecture according to an embodiment of this application. The FL architecture is a most widely used training architecture in a current FL field. A FedAvg algorithm is a basic algorithm of FL, and a procedure of the FedAvg algorithm is roughly as follows:

(1) A central node initializes a to-be-trained model $_{\mathrm{Wh}}{}^{0}$ and broadcasts and sends the model to all distributed nodes.

(2) In a (t E [1, *T]*)$^{th}$ round, a distributed node $k \in [1, K]$ performs E epochs (epoch) of training on a received global model $w_g^{t-1}$ based on a local dataset $D_k$ to obtain a local training result $w_k^t$, and report the local training result to the central node.

(3) The central node summarizes and collects local training results from all (or some) clients. It is assumed that a set of clients that upload a local model in a t$^{th}$ round is $\mathcal{S}^t$. The central node performs weighted averaging by using a quantity of samples of a corresponding client as a weight to obtain a new global model, and a specific update rule is $w_g^t = \sum_{k \in \mathcal{S}^t} \frac{D_k w_k^t}{\sum_{k \in \mathcal{S}^t} D_k}$. Then, the central end broadcasts and sends a global model $w_g^t$ of a latest version again to all client devices for a new round of training.

(4) Steps (2) and (3) are repeated until the model converges finally or a quantity of training rounds reaches an upper limit.

In addition to reporting the local model $w_k^t$, a trained local gradient $g_k^t$ may also be reported. The central node averages the local gradient, and updates the global model based on a direction of the average gradient.

It can be seen that, in an FL framework, a dataset exists on a distributed node. To be specific, the distributed node collects a local dataset, performs local training, and reports a local result (a model or a gradient) obtained through training to the central node. The central node does not have a dataset, is only responsible for fusing training results of the distributed nodes to obtain a global model, and delivers the global model to the distributed nodes.

Split learning:

FIG. 6 is a diagram of a split learning (split learning) architecture according to an embodiment of this application. In split learning, a complete neural network model is split into two parts (namely, two subnetworks), where one part is deployed on a distributed node, and the other part is deployed on a central node. A place in which the complete neural network is split is referred to as a "split layer". During forward inference, the distributed node inputs local data into a local subnetwork, performs inference to the split layer, and sends a result $F_k$ of the split layer to the central node through a communication link. The central node inputs the received result $F_k$ into another subnetwork deployed by the central node, and continues to perform forward inference to obtain a final inference result. During reverse gradient transfer of model training, a gradient is reversely transferred to the split layer through a subnetwork of the central node, to obtain a reverse transfer result $G_k$. Then, the central node sends $G_k$ to the distributed node, and reverse gradient transfer continues to be performed on a subnetwork of the distributed node.

It can be seen that, in a process of forward inference and reverse gradient transfer of split learning, only one distributed node and one central node are involved. A subnetwork of a trained distributed node may be stored locally on the distributed node or on a specific model storage server. When a new distributed node joins in a learning system, the distributed node may first download the subnetwork of the trained distributed node, and then use local data for further training.

Federated distillation:

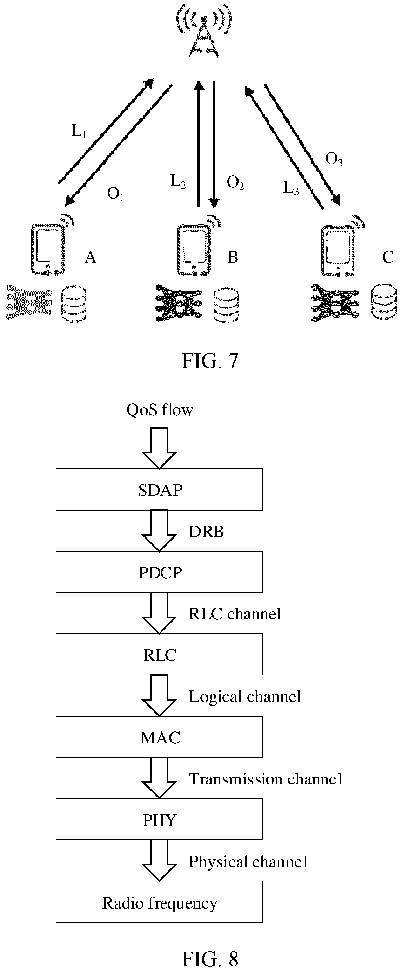

FIG. 7 is a diagram of a federated distillation architecture according to an embodiment of this application. Federated distillation is also a feasible distributed learning method. Similar to federated learning, a plurality of distributed nodes exchange information with a central node, to jointly complete training of a machine learning model. Different from federated learning, the information exchanged between the distributed node and the central node in federated distillation is logits (logits), rather than a parameter or a gradient of a model in federated learning. A working process of federated distillation is similar to that of federated learning, and details are not described herein again.

It can be learned from the descriptions of federated learning, split learning, and federated distillation that different learning architectures require different information to be transmitted between participating nodes. For example, in federated learning, a parameter or a gradient of a machine learning model is transmitted between a central node and a distributed node; in split learning, an intermediate inference result of inference to a split layer is transmitted from a distributed node to a central node, and a gradient reversely transferred to the split layer is transmitted from the central node to the distributed node; and in federated distillation, information transmitted between a central node and a distributed node is logits (logits). In this application, the information transmitted between nodes is collectively referred to as AI traffic. When distributed learning is adopted at an L1/L2 protocol layer such as a physical layer or a MAC layer of a wireless communication system (that is, a task of a model is a physical-layer task or a MAC-layer task, and an input and/or an output of the model are/is from or sent to the physical layer or the MAC layer), the AI traffic is generated at the corresponding L1/L2 protocol layer. The AI traffic is different from traffic data streams delivered by an application layer, and a new communication method needs to be designed.

However, an existing communication solution provides only a protocol stack processing process of data at an upper layer such as an application layer/a network layer, and cannot be applied to data streams such as the AI traffic generated at a lower protocol layer such as a physical/MAC layer. FIG. 8 is a diagram of transmission of application-layer data according to a conventional technology. For a data stream at an upper layer such as an application layer/a network layer, a transmission mode of a new radio (new radio, NR) standard is described as follows: A QoS flow is constructed, mapped level by level to layers such as an SDAP/PDCP/RLC/MAC/PHY layer in a protocol stack, and finally sent through a radio frequency air interface. Functions of each protocol layer are as follows:

SDAP: maintains mapping from a QoS flow to a data radio bearer (data radio bearer, DRB).
PDCP: data integrity and encryption.
RLC: buffer and automatic repeat request (automatic repeat-request, ARQ).
MAC: radio resource management (radio resource management, RRM), hybrid automatic repeat request (hybrid automatic repeat-request, HARQ), and multiplexing (multiplexing).
PHY: constructs a transmission channel, and performs channel coding, modulation, resource mapping, and other processing.

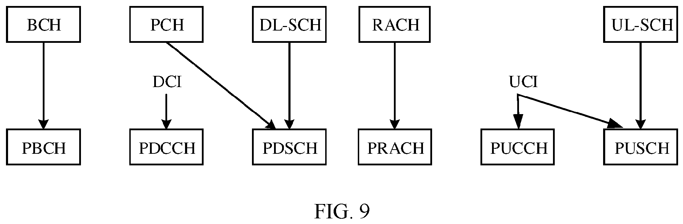

In addition, FIG. 9 is a diagram of communication of uplink control information (uplink control information, UCI) and downlink control information (downlink control information, DCI). UCI/DCI is existing to-be-transmitted data generated at the physical/MAC layer.

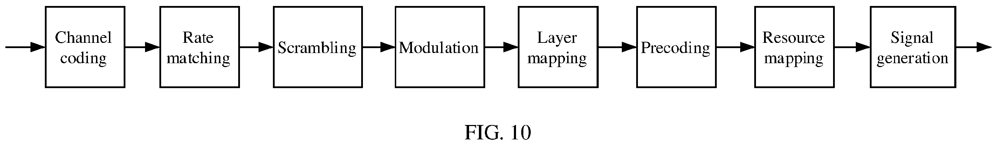

FIG. 10 is a diagram of a data processing procedure of an existing physical channel. The UCI/DCI is transmitted after special processing shown in FIG. 10 is performed on a dedicated physical channel (a control channel). In existing cellular network standards (long term evolution (long term evolution, LTE) and NR), UCI/DCI has a fixed format, and includes a plurality of fields. A meaning of a bit in each field is given in the standard. DCI in format0_0 in the NR is used as an example. The DCI includes fields such as an identifier (identifier), a frequency domain (frequency domain, F) location, a time domain (time domain, T) location, hopping, an MCS, new data (newData), a redundancy version (redundancy version, RV), HARQ, TPC, and UL/SUL. The UCI may include content such as channel state information (channel state information, CSI)/a channel quality indicator (channel quality indicator, CQI)/a rank indicator (rank indication, RI)/a precoding matrix indicator (precoding matrix indicator, PMI)/a length indicator (length indicator, LI)/a CRI, and an acknowledgement (acknowledgement, ACK) response/a non-acknowledgement (non-acknowledgement, NACK) response. The UCI/DCI is shorter and more important than common data.

However, as shown in FIG. 10, the physical dedicated channel for transmitting the UCI/DCI and related processing are only applicable to shorter bit sequences. The AI traffic may include large data packets such as a parameter, a gradient, and even training data of a machine learning model. There may be a requirement for splitting/packing these data packets during transmission. A physical channel of an existing protocol does not support such processing.

In view of this, this application provides a communication solution. A first node sends first indication information and/or second indication information to a second node, where the first indication information indicates dataset state information, and the second indication information indicates model state information; the second node determines a communication scheme and a communication resource based on the first indication information and/or the second indication information; and the second node sends third indication information to the first node, where the third indication information indicates the communication scheme and the communication resource, and the communication scheme and the communication resource are determined based on the first indication information and/or the second indication information. According to the solution of this application, the dataset state information and/or the model state information of the first node are obtained, to determine the communication scheme and the communication resource, and indicate the communication scheme and the communication resource to the first node. This improves communication reliability.

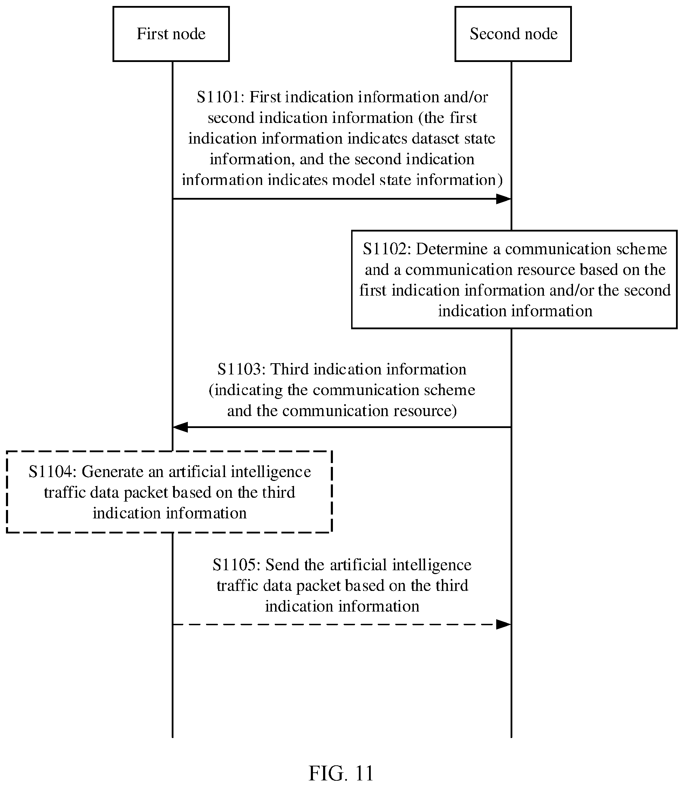

FIG. 11 is a schematic flowchart of a communication method according to an embodiment of this application. The communication method is applied to the communication system shown in FIG. 1. For example, the method may include the following steps.

S1101: A first node sends first indication information and/or second indication information to a second node.

Correspondingly, the second node receives the first indication information and/or the second indication information.

The first indication information indicates dataset state information (dataset state information, DSI), and the second indication information indicates model state information (model state information, MSI).

For example, the first node may send the first indication information to the second node; or the first node sends the second indication information to the second node; or the first node sends the first indication information and the second indication information to the second node.

For example, the first node may report the first indication information and/or the second indication information through a data channel, a control channel, or another dedicated channel.

The dataset state information indicates how the first node obtains input data of a model. The dataset state information affects determining of a communication scheme and a communication resource of an artificial intelligence data packet. The dataset state information includes at least one of the following information: a data type, a sampling frequency, sampling location information, a sample timestamp, a quantity of samples, and sample precision.

For example, for the data type, a physical layer includes data of at least one of the following types: channel, signal strength, and signal to interference plus noise ratio (signal to interference plus noise ratio, SINR). A MAC layer includes data of at least one of the following types: scheduling, resource allocation, buffer status, and link adaptation.

The sampling frequency may indicate that sampling is performed once at an interval of minislots (minislot)/slots (slot)/subframes (subframe)/frames (frame)/seconds.

The sampling location information may be represented in any one of the following modes: a cell identifier (cell identifier), a base station distance, and a global positioning system (global positioning system, GPS) location. This is not limited in this application.

The sample precision may be represented in at least one of the following modes: a doubleprecision floating point number (double), a 64-bit floating point number (float64), a floating point (float), a 32-bit floating point number (float32), a 16-bit floating point number (float16), an 8-bit floating point number (float8), an integer (int), a 64-bit integer (int64), a 32-bit integer (int32), a 16-bit integer (int16), an 8-bit integer (int8), and a binary number (bin).

For example, that the first indication information indicates dataset state information may mean that each of the foregoing at least one piece of dataset state information is separately indicated or jointly indicated. For each of the foregoing at least one piece of dataset state information, for example, for the data type, several bits may indicate a plurality of data types. For example, if there are eight data types, a 3-bit binary number may indicate the eight data types.

The model state information is a description of a model used by the first node. The model state information includes at least one of the following information: a model type, a model identifier, a submodel order, a model version number, a model description, a model update timestamp, model update location information, model precision, and model performance.

The model type includes at least one of the following: a fully connected neural network (fully connected neural network, FCNN), a convolutional neural network (convolutional neural network, CNN), a recurrent neural network (recurrent neural network, RNN), a transformer (transformer), and a hybrid model.

The model identifier (model identifier) is used to index a corresponding model and task.

The submodel order indicates whether a model is a submodel, indicates an order, and is used to construct a complete model.

The model version number is used for version synchronization.

The model description includes a quantity of parameters, an inference calculation amount, and the like.

The model performance indicates inference performance on a reference dataset.

For example, that the second indication information indicates model state information may mean that each of the foregoing at least one piece of model state information is separately indicated or jointly indicated. For each of the foregoing at least one piece of model state information, for example, for the model type, several bits may indicate a plurality of model types. For example, if there are six model types, a 3-bit binary number may indicate the six model types.

S1102: The second node determines a communication scheme and a communication resource based on the first indication information and/or the second indication information.

In the communication system shown in FIG. 1, the second node may communicate with one or more first nodes. After receiving the first indication information and/or the second indication information, the second node schedules first nodes and determines a first node that needs to send artificial intelligence traffic data in an uplink.

In addition, a channel state between the first node and the second node, to some extent, affects determining of the first node that needs to send the artificial intelligence traffic data in the uplink. Therefore, the first node that needs to send the artificial intelligence traffic data in the uplink may alternatively be determined based on at least two of the first indication information, the second indication information, and channel state information.

The second node may perform channel estimation to determine the channel state information between the first node and the second node; or the second node may obtain the channel state information between the first node and the second node in a manner such as channel reciprocity or the first node feeding back the channel state information.

Manners in which the second node schedules the first nodes include but are not limited to the following manners: **In** one manner, a first node in a good channel condition is scheduled.

**In** another manner, a first node whose dataset meets a requirement is scheduled, for example, a first node whose one or more of parameters such as a data type, a sampling frequency, a sampling location, sampling time, a quantity of samples, and sample precision meet a requirement of the second node is scheduled.

In still another manner, a first node whose model meets a requirement is scheduled, for example, a first node whose one or more of parameters such as a model type, a model identifier, a model description, model update time, a model update location, model precision, and model performance meet a requirement is scheduled.

In another implementation, a first node that is in a good channel condition and whose dataset meets a requirement is scheduled.

In another implementation, a first node that is in a good channel condition and whose model meets a requirement is scheduled.

In another implementation, a first node that is in a good channel condition, whose dataset meets a requirement, and whose model meets a requirement is scheduled.

After determining the first node that needs to send the artificial intelligence traffic data in the uplink, the second node determines the communication scheme used by the first node for uplink transmission.

The communication scheme includes at least one of the following schemes: a quantization scheme, a source coding scheme, a modulation and coding scheme (modulation and coding scheme, MCS), a joint source-channel coding scheme, and a real-number or complex-number processing scheme.

The dataset state information and the model state information affect the communication scheme used by the first node. The second node may determine the communication scheme based on the first indication information, or the second indication information, or the first indication information and the second indication information.

In addition, the channel state between the first node and the second node has impact on communication schemes used by the first node and the second node to some extent. For example, if a channel condition is good, higher quantization precision may be selected; or if a channel condition is poor, lower quantization precision may be selected. For another example, if a channel condition is good, a higher MCS level may be selected; or if a channel condition is poor, a lower MCS level may be selected. Therefore, the communication scheme may alternatively be determined based on the at least two of the first indication information, the second indication information, and the channel state information.

The second node may further determine, based on the first indication information and/or the second indication information, a communication resource that can be used or needs to be used by the first node.

The communication resource that can be used or needs to be used by the first node is related to a size of an artificial intelligence traffic data packet that needs to be transmitted by the first node in the uplink. For example, the second node may first obtain the size of the artificial intelligence traffic data packet, and then determine the communication resource based on at least two of the size of the artificial intelligence traffic data packet, the first indication information, and the second indication information.

The size of the artificial intelligence traffic data packet may be obtained in the following two manners.

In one manner, it is considered that a quantity of AI-related tasks at a PHY/MAC layer is limited. Therefore, a fixed data packet size may be defined in advance for each type of artificial intelligence traffic data packet of each type of AI task, as shown in Table 1.

Table 1 Artificial intelligence traffic data packet of a fixed size

| AI task | Type of the artificial intelligence traffic data packet | Size |
|---|---|---|
| CSI compression | Data | S1 |
| | Model parameter | S2 |
| | Inference result | S3 |
| | Gradient | S4 |
| ... | ... | ... |
| Beam management | Data | A1 |
| | Model parameter | A2 |
| | Inference result | A3 |
| | Gradient | A4 |

As shown in Table 1, if the AI task is channel state information (channel state information, CSI) compression, and the type of the artificial intelligence traffic data packet is data, the corresponding size of the artificial intelligence traffic data packet is S1; if the AI task is CSI compression, and the type of the artificial intelligence traffic data packet is a model parameter, the corresponding size of the artificial intelligence traffic data packet is S2; and so on.

The second node can obtain the task type of the AI task and the type of the artificial intelligence traffic data packet, and therefore can determine the size of the artificial intelligence traffic data packet (namely, an amount of data to be communicated) based on a correspondence between a data packet size and at least one of the task type and the service type. For example, if the second node obtains that the type of the AI task is beam management, and the type of the artificial intelligence traffic data packet is a model parameter, the second node may determine, based on the correspondence in Table 1, that the size of the artificial intelligence traffic data packet is A2.

After determining the size of the artificial intelligence traffic data packet, the second node may determine the communication resource based on the at least two of the size of the artificial intelligence traffic data packet, the first indication information, and the second indication information.

In an example, the second node calculates a quantity of modulation symbols based on the size of the artificial intelligence traffic data packet, the quantization scheme, the source coding scheme, and the MCS, and then determines the communication resource based on the quantity of modulation symbols.

In another example, the second node calculates a quantity of modulation symbols based on the size of the artificial intelligence traffic data packet, the quantization scheme, the joint source-channel coding scheme, and the modulation scheme, and then determines the communication resource based on the quantity of modulation symbols.

In still another example, the second node calculates a quantity of to-be-communicated real-number symbols based on the size of the artificial intelligence traffic data packet and the real-number or complex-number processing scheme, and then determines the communication resource based on the quantity of to-be-communicated real-number symbols.

In another manner, when the size of the artificial intelligence traffic data packet is not limited to a fixed size in a manner similar to that in Table 1, the first node may report the size of the artificial intelligence traffic data packet to the second node, and the second node receives the size that is of the artificial intelligence traffic data packet and that is reported from the first node.

S1103: The second node sends third indication information to the first node.

Correspondingly, the first node receives the third indication information.

The third indication information indicates the communication scheme and the communication resource.

For example, the second node may indicate, based on downlink control information (downlink control information, DCI) or learning control information (learning control information, LCI), the scheduled first node, and indicate the communication scheme and the communication resource that are used by the first node for uplink transmission. The second node may use a reserved field in an existing DCI format to carry the communication scheme and the communication resource, or use a newly defined DCI format to carry the communication scheme and the communication resource, or use newly defined LCI to carry the communication scheme and the communication resource. The LCI may be a newly defined information format used for distributed learning.

For example, the DCI/LCI may be scrambled by using a dedicated radio network temporary identity (radio network temporary identity, RNTI), for example, a learning-radio network temporary identity (learning-radio network temporary identity, L-RNTI).

After receiving the DCI/LCI, the first node descrambles the DCI/LCI by using a dedicated RNTI. If descrambling succeeds, the DCI/LCI are/is sent to the first node.

Optionally, the method may further include the following steps (represented by dashed lines in the figure).

S1104: The first node generates the artificial intelligence traffic data packet based on the third indication information.

After receiving the third indication information, the first node generates the artificial intelligence traffic data packet based on the third indication information. For example, the first node generates the artificial intelligence traffic data packet based on the communication scheme and the communication resource that are indicated by the third indication information. For example, when an amount of a communication resource required by the artificial intelligence traffic data packet is greater than an amount of the communication resource indicated by the third indication information, the first node may split the artificial intelligence traffic data packet into several sub-data packets, so that each sub-data packet complies with the communication resource indicated by the third indication information. For another example, the first node performs quantization processing on the artificial intelligence traffic data packet based on the quantization scheme (a communication scheme) indicated by the third indication information, to comply with the quantization scheme indicated by the third indication information. For another example, the first node modulates the artificial intelligence traffic data packet based on the modulation and coding scheme (a communication scheme) indicated by the third indication information, to comply with the modulation and coding scheme indicated by the third indication information.

The artificial intelligence traffic data packet includes a packet header and a payload (payload).

The payload includes at least one of the following data: a parameter or a gradient of a machine learning model, an inference result, an intermediate result of inference to a split layer, a gradient reversely transferred to the split layer, and logits.

The packet header includes at least one of the following:

Content indication information: indicates the at least one type of data included in the payload.

Content description information: indicates a timestamp, a location of obtaining, version information, and the like of the at least one type of data included in the payload.

Compression mode: indicates a pruning location (namely, a location at which the artificial intelligence traffic data packet is split) of the payload, whether to perform distillation, and the like.

Packing mode: indicates a sequence number of a complete artificial intelligence traffic data packet and sequence numbers of sub-data packets obtained after the complete artificial intelligence traffic data packet is split (when a data volume of the artificial intelligence traffic data packet is large, the artificial intelligence traffic data packet may be sent by using a plurality of sub-data packets, and a packet header includes sequence numbers of the sub-data packets, so that the second node performs packing after receiving the plurality of sub-data packets).

S1105: The first node sends the artificial intelligence traffic data packet to the second based on the third indication information.

Correspondingly, the second node receives the artificial intelligence traffic data packet sent based on the third indication information.

For example, the first node sends, based on the communication scheme indicated by the third indication information, the artificial intelligence traffic data packet to the second node on the communication resource indicated by the third indication information.

Further, the artificial intelligence traffic data packet is communicated through a physical learning channel.

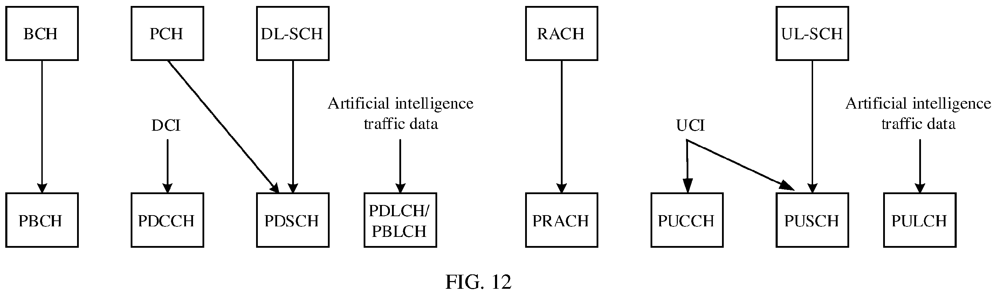

FIG. 12 is a diagram of communication of artificial intelligence traffic data according to an embodiment of this application. The physical learning channel is a new physical channel defined for artificial intelligence traffic data at a PHY/MAC layer, and may include the following:

a physical uplink learning channel (physical uplink learning channel, PULCH) on an uplink;
a physical downlink learning channel (physical downlink learning channel, PDLCH) on a downlink; and
a physical broadcast learning channel (physical broadcast learning channel, PBLCH)

For example, the PULCH/PDLCH/PBLCH may be carried by a dedicated time-frequency resource.

A main difference between the physical learning channel processing and the conventional technology (as shown in FIG. 10) lies in that artificial intelligence traffic data is generally in a form of a real number or a complex number, and processing such as bit-level channel coding cannot be directly performed. Therefore, operations such as quantization, source coding, joint source-channel coding, and real-number or complex-number processing need to be added to a data processing procedure of the physical learning channel. Possible implementations of the processing operation of the physical learning channel are as follows:

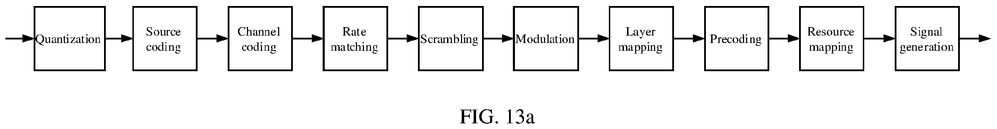

An implementation 1: Communication through the physical learning channel includes at least one of the following processing operations: quantization, and source coding. For example, FIG. 13a is a diagram of a data processing procedure of a physical learning channel according to an embodiment of this application. Communication through the physical learning channel includes the following processing operations: quantization, source coding, channel coding, rate matching, scrambling, modulation, layer mapping, precoding, resource mapping, orthogonal frequency division multiplexing (orthogonal frequency division multiplexing, OFDM) signal generation, and the like. Channel coding and subsequent processing operations may reuse the processing operations corresponding to FIG. 10, or may use a specially designed corresponding processing operation (for example, use channel coding, modulation, or signal generation different from that in an existing standard). It can be seen that, in the processing procedure shown in FIG. 13a, in comparison with that in the existing standard, the processing operations "quantization" and "source coding" are added to the physical learning channel. If artificial intelligence traffic data is a real number, quantization means to quantize a real-number value included in the artificial intelligence traffic data into several real numbers with limited possibilities. If artificial intelligence traffic data is a complex number, quantization means to quantize a real-part value that is of the complex number and that is included in the artificial intelligence traffic data into several real numbers with limited possibilities, and quantize an imaginary-part value that is of the complex number and that is included in the artificial intelligence traffic data into several real numbers with limited possibilities. A quantization mode such as uniform quantization, non-uniform quantization, or vector quantization may be used. Source coding means to code a real-number value obtained through quantization into a bit sequence. A source coding mode such as Huffman (Huffman) coding, arithmetic coding, or L-Z coding may be used.

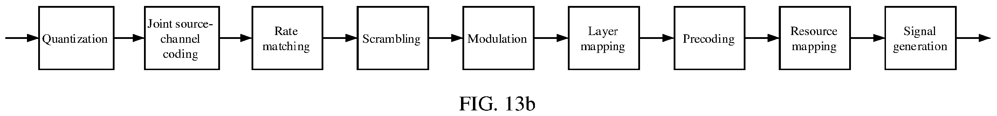

An implementation 2: Communication through the physical learning channel includes at least one of the following processing operations: quantization, and joint source-channel coding. For example, FIG. 13b is a diagram of another data processing procedure of a physical learning channel according to an embodiment of this application. Communication through the physical learning channel includes the following processing operations: quantization, joint source-channel coding, rate matching, scrambling, modulation, layer mapping, precoding, resource mapping, OFDM signal generation, and the like. Rate matching and subsequent processing operations may reuse the processing operations corresponding to FIG. 10, or may use a specially designed corresponding processing operation (for example, use channel coding, modulation, or signal generation different from that in an existing standard). It can be learned that, in the processing operation shown in FIG. 13b, in comparison with that in the existing standard, the processing operations "quantization" and "joint source-channel coding" are added to the physical learning channel, and the processing operation "channel coding" is deleted. For a concept of the quantization operation, refer to the description of the implementation 1. Joint source-channel coding means to code a real-number value obtained through quantization into a bit sequence. The joint source-channel coding operation combines source coding and channel coding. Through the processing, a quantized output is compressed, and transmission reliability is improved.

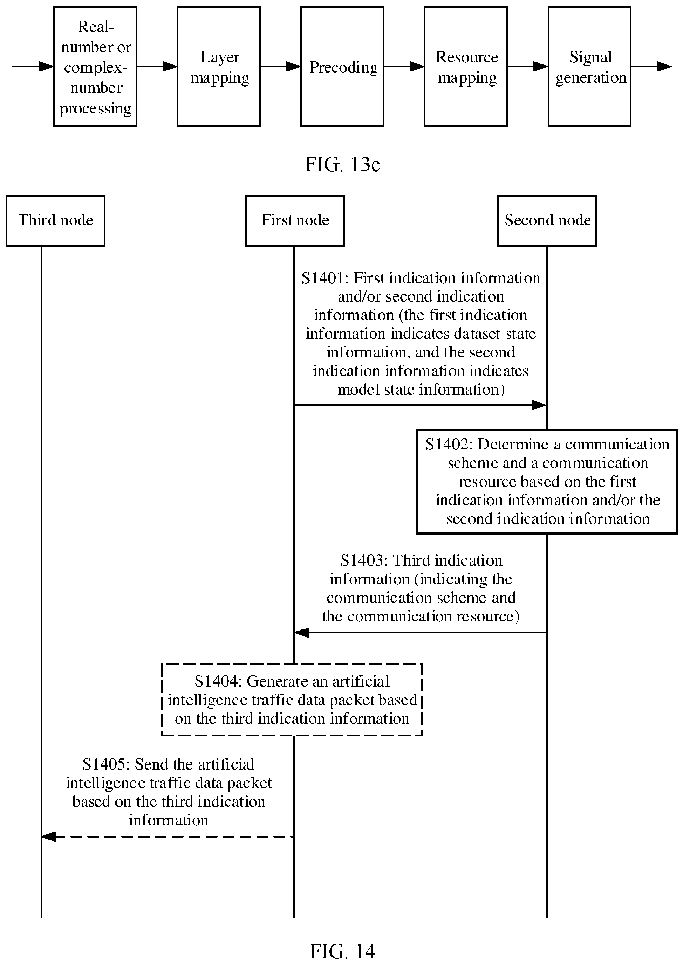

An implementation 3: Communication through the physical learning channel includes the following processing operation: real-number processing. For example, FIG. 13c is a diagram of still another data processing procedure of a physical learning channel according to an embodiment of this application. Communication through the physical learning channel includes the following processing operations: real-number processing, layer mapping, precoding, resource mapping, OFDM signal generation, and the like. Layer mapping and subsequent processing operations may reuse the processing operations corresponding to FIG. 10, or may use a specially designed corresponding processing operation (for example, use channel coding, modulation, or signal generation different from that in an existing standard). It can be learned that, in the processing operation shown in FIG. 13c, in comparison with the existing standard, the operation "real-number or complex-number processing" is added to the physical learning channel, and the processing operations such as "channel coding", "rate matching", "scrambling", and "modulation" are deleted. The real-number or complex-number processing operation means to map a real part and an imaginary part that are of a real-number value or a complex-number value and that are included in artificial intelligence traffic data into a group of real-number sequences, and directly perform subsequent processing such as layer mapping for sending.

For example, the real-number or complex-number processing operation may map a real part and an imaginary part of an input real-number value or an input complex-number value to a real-number sequence. For example, if the input is a real-number value, a mapping mode may be directly obtaining equality (that is, an output is equal to the input), or may be mapping the input real-number value to several real-number values with limited possibilities (for example, a number less than or equal to -1 is mapped to -1, a number from -1 to 0 is mapped to -0.5, a number from 0 to 1 is mapped to 0.5, and a number greater than or equal to 1 is mapped to 1).

The real-number sequence output by the real-number or complex-number processing operation is mapped to a time-frequency-space transmission resource through operations such as layer mapping, precoding, and resource mapping, a signal is obtained through signal generation, and then the signal is sent. Signals simultaneously sent by a plurality of first nodes are received by a second node after signals on a same time-frequency-space transmission resource are superposed. The second node may perform processing based on the superposed signals to obtain required information. This is a process of over-the-air computation.

For example, a packet header and a payload of the artificial intelligence traffic data packet may be separately sent. For example, a bit sequence included in the packet header may be sent through the existing physical channel shown in FIG. 10 after processing such as channel coding, rate matching, scrambling, and modulation is performed; and the payload may be sent through the physical learning channel.

After receiving the artificial intelligence traffic data packet, the second node unpacks the artificial intelligence traffic data packet based on the packet header, to obtain a required artificial intelligence traffic data packet.

According to the communication method provided in this embodiment of this application, the dataset state information and/or the model state information of the first node are obtained, to determine the communication scheme and the communication resource, and indicate the communication scheme and the communication resource to the first node. The first node communicates with the second node based on the communication scheme and the communication resource. This improves communication reliability.

In another embodiment, the foregoing step S1104 may be replaced with the following: The second node generates the artificial intelligence traffic data packet based on the third indication information. For details about how to generate the artificial intelligence traffic data packet, refer to the description of the foregoing step S1104. The foregoing step S1105 may also be replaced with the following: The second node sends the artificial intelligence traffic data packet to the first node based on the third indication information. Correspondingly, the first node receives the artificial intelligence traffic data packet sent based on the third indication information. In other words, after determining the third indication information, the second node sends the artificial intelligence traffic data packet to the first node based on the third indication information. For communication of the artificial intelligence traffic data packet, refer to the description of the foregoing S1105. Details are not described herein again.

FIG. 14 is a schematic flowchart of another communication method according to an embodiment of this application. The communication method is applied to the communication system shown in FIG. 3. For example, the method may include the following steps.

S1401: A first node sends first indication information and/or second indication information to a second node, where the first indication information indicates dataset state information, and the second indication information indicates model state information.

Correspondingly, the second node receives the first indication information and/or the second indication information.

For specific implementation of this step, refer to step S1101 shown in FIG. 11. Details are not described herein again.

S1402: The second node determines a communication scheme and a communication resource based on the first indication information and/or the second indication information.

For specific implementation of this step, refer to step S1102 shown in FIG. 11. Details are not described herein again.

When the first node that needs to send artificial intelligence traffic data in an uplink is determined based on the first indication information, the second indication information, and channel state information, and the communication scheme is determined based on the first indication information, the second indication information, and the channel state information, the channel state information includes channel state information between the first node and a third node, or the channel state information includes channel state information between the first node, the second node, and a third node.

S1403: The second node sends third indication information to the first node, where the third indication information indicates the communication scheme and the communication resource.

Correspondingly, the first node receives the third indication information.

For specific implementation of this step, refer to step S1103 shown in FIG. 11. Details are not described herein again.

Optionally, the method may further include the following steps (represented by dashed lines in the figure).

S1404: The first node generates an artificial intelligence traffic data packet based on the third indication information.

For specific implementation of this step, refer to step S1104 shown in FIG. 11. Details are not described herein again.

S1405: The first node sends the artificial intelligence traffic data packet to the third node based on the third indication information.

Correspondingly, the third node receives the artificial intelligence traffic data packet.

Different from the embodiment shown in FIG. 11, the method is applied to the communication system shown in FIG. 3. The first node communicates with the third node based on the communication scheme and the communication resource that are indicated by the third indication information sent by the second node. For example, the first node sends the artificial intelligence traffic data packet to the third node based on the third indication information.

According to the communication method provided in this embodiment of this application, the dataset state information and/or the model state information of the first node are obtained, to determine the communication scheme and the communication resource, and indicate the communication scheme and the communication resource to the first node.

The first node communicates with the third node based on the communication scheme and the communication resource. This improves communication reliability.

In another embodiment, the foregoing step S1403 may be replaced with the following: The second node sends third indication information to the third node. Correspondingly, the third node receives the third indication information. The foregoing step S1404 may be replaced with the following: The third node generates an artificial intelligence traffic data packet based on the third indication information. The foregoing step S1405 may be replaced with the following: The third node sends the artificial intelligence traffic data packet to the first node based on the third indication information. Correspondingly, the first node receives the artificial intelligence traffic data packet.

The foregoing embodiment describes the communication method of the artificial intelligence traffic data in a lower-layer protocol stack such as a physical layer and/or a MAC layer. The following embodiment describes a communication method of artificial intelligence traffic data in a high-layer protocol stack.

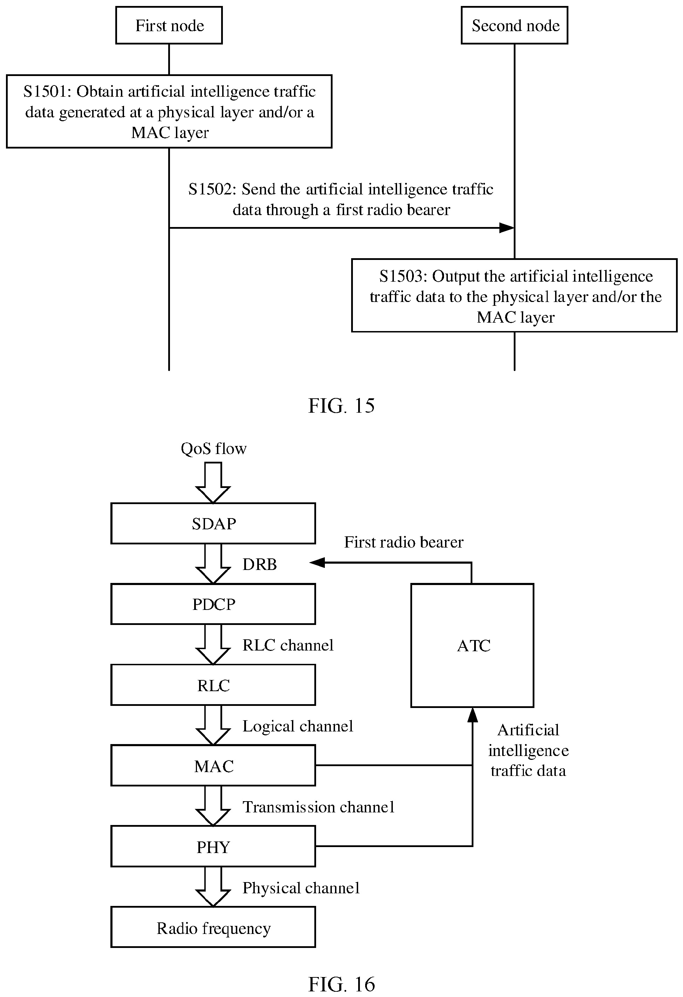

FIG. 15 is a schematic flowchart of still another communication method according to an embodiment of this application. The communication method is applied to the communication system shown in FIG. 1 or FIG. 3. The communication system relates to a first node and a second node. The first node may be a terminal, and the second node may be a network device. Alternatively, the first node may be a network device, and the second node may be a terminal. For example, the method may include the following steps.

S1501: The first node obtains artificial intelligence traffic data generated at a physical layer and/or a MAC layer.

The first node performs machine learning at an L1/L2 protocol layer such as a physical layer or a MAC layer of a wireless communication system, and obtains the artificial intelligence traffic data generated at the physical layer and/or the MAC layer. For a meaning and included content of the artificial intelligence traffic data, refer to the foregoing embodiment.

S1502: The first node sends the artificial intelligence traffic data to the second node through a first radio bearer.

Correspondingly, the second node receives the artificial intelligence traffic data through the first radio bearer.

For example, FIG. 16 shows a protocol stack processing procedure of the artificial intelligence traffic data. An artificial intelligence traffic data control (AI traffic control, ATC) layer is added to the protocol stack. The ATC layer is configured to input the artificial intelligence traffic data generated by the physical layer/the MAC layer into the first radio bearer.

For example, another protocol stack processing procedure of the artificial intelligence traffic data may be as follows: A function of inputting the artificial intelligence traffic data generated at the physical layer/the MAC layer into the first radio bearer is added in an existing module or protocol stack, so that the existing module or protocol stack to which the function is added may input the artificial intelligence traffic data generated at the physical layer/the MAC layer into the first radio bearer.

For example, the first radio bearer is a newly defined learning radio bearer (learning radio bearer, LRB) or a newly defined first data radio bearer. The first data radio bearer is a new data radio bearer (new DRB).

After the ATC layer or the existing module or protocol stack to which the function is added inputs the artificial intelligence traffic data to the first radio bearer, the first node processes the artificial intelligence traffic data at at least one of the following protocol layers: a PDCP layer, an RLC layer, the MAC layer, and the PHY layer, to obtain processed artificial intelligence traffic data. Specifically, the first node performs data integrity protection, encryption, and the like on the artificial intelligence traffic data at the PDCP layer; the first node performs buffering, segmentation and reassembly, and the like at the RLC layer on the artificial intelligence traffic data processed at the PDCP layer; the first node performs mapping between a logical channel and a transmission channel, multiplexing/demultiplexing, scheduling, HARQ, logical channel priority setting, and the like at the MAC layer on the artificial intelligence traffic data processed at the RLC layer; and the first node performs processing such as channel coding, modulation, and resource mapping at the PHY layer on the artificial intelligence traffic data processed at the MAC layer. Then, the first node sends the processed artificial intelligence traffic data to the second node through a data channel, a control channel, or a dedicated channel.

Correspondingly, the second node receives the processed artificial intelligence traffic data.

S1503: The second node outputs the artificial intelligence traffic data to the physical layer and/or the MAC layer.

After the second node receives the processed artificial intelligence traffic data through a radio frequency module, the second node processes the artificial intelligence traffic data at at least one of the following protocol layers: the PHY layer, the MAC layer, the RLC layer, and the PDCP layer. Processing the artificial intelligence traffic data at at least one protocol layer may be processing the artificial intelligence traffic data at one or more protocol layers of the PHY layer, the MAC layer, the RLC layer, and the PDCP layer. For example, the second node processes the artificial intelligence traffic data at the PHY layer, the MAC layer, the RLC layer, and the PDCP layer sequentially.

Then, the second node outputs the processed artificial intelligence traffic data to the PHY layer and/or the MAC layer.

In an example, the second node may input the processed artificial intelligence traffic data to the ATC layer through the first radio bearer, and the ATC layer outputs, to the PHY layer and/or the MAC layer, the artificial intelligence traffic data input through the first radio bearer.

In another example, the second node may alternatively input the processed artificial intelligence traffic data to an existing module or protocol layer through the first radio bearer. A function of outputting the artificial intelligence traffic data input from the first radio bearer to the PHY layer and/or the MAC layer is added to the existing module or protocol layer, so that the artificial intelligence traffic data input from the first radio bearer can be output to the PHY layer and/or the MAC layer.

A processing procedure of the second node is an inverse procedure of the processing procedure in FIG. 16, and details are not described herein again.

According to the communication method provided in this embodiment of this application, a new protocol stack processing procedure is defined. After the artificial intelligence traffic data generated at the PHY/MAC layer is input to the first radio bearer through the ATC layer, the artificial intelligence traffic data may be sent to the second node through the first radio bearer, so that communication of the artificial intelligence traffic data generated at the PHY/MAC layer is implemented.

In another embodiment, to construct the first radio bearer, the following steps may be further included: A network device sends first signaling to a terminal, where the first signaling indicates to configure the first radio bearer.

Correspondingly, the terminal receives the first signaling.

With reference to the foregoing embodiment, when the first node is a terminal and the second node is a network device, the second node sends the first signaling to the first node; or when the first node is a network device and the second node is a terminal, the first node sends the first signaling to the second node.

For example, the first signaling is radio resource control (radio resource control, RRC) signaling. For example, the first radio bearer is an LRB. Configuring the first radio bearer includes adding the LRB and releasing the LRB. Specifically, the LRB is added/released in a radio bearer configuration (RadioBearerConfig) information element of the RRC signaling, and specific content of the information element is as follows:

```
LRB-ToAddModList ::= SEQUENCE (SIZE (1..maxLRB)) OF LRB-ToAddMod
LRB-ToAddMod ::= SEQUENCE {
lrb-Identity        LRB-Identity,
reestablishPDCP ENUMERATED{true}            OPTIONAL, -- Need N
recoverPDCP         ENUMERATED{true}            OPTIONAL, -- Need N
pdcp-Config         PDCP-Config                 OPTIONAL, -- Cond PDCP
...,
}
LRB-ToReleaseList ::= SEQUENCE (SIZE (1..maxLRB)) OF LRB-Identity
```

For each to-be-added LRB (*LRB-ToAddMod*) in a to-be-added LRB list (*LRB-ToAddModList*), its LRB identifier (an *LRB-Identity* field) (for example, a number may be used for identification) is viewed.

(a) If the LRB corresponding to the *LRB-Identity* field is not in an LRB list of a current terminal, then:

i. a PDCP entity (*reestablishPDCP*) is established, and configuration is performed based on a PDCP configuration (*pdcp-Config*) field in *LRB-ToAddMod,* where the configuration method is the same as a configuration method of an existing PDCP entity.

(b) If the LRB corresponding to the *LRB-Identity* field is already in an LRB list of a current terminal, then:

i. if a *reestablishPDCP* field is true (true), a PDCP entity is re-established, and configuration is performed based on a *pdcp-Config* field in *LRB-ToAddMod,* where the configuration method is the same as a configuration method of an existing PDCP entity; and
ii. if a recover PDCP (*recoverPDCP*) field is true, a PDCP entity corresponding to the LRB corresponding to the *LRB-Identity* field is recovered.

An LRB release procedure includes releasing an LRB corresponding to an *LRB-Identity* field in a to-be-released LRB list (*LRB-ToReleaseList*) and a PDCP entity corresponding to the LRB.

An example of an LRB establishment procedure is as follows. For meanings of fields that are the same as those in an existing communication standard, refer to explanations in the existing communication standard. Details are not described herein again.

The network device sends radio resource control reconfiguration (RRCReconfiguration) signaling to the terminal:

```
-- ASN1START
-- TAG-RRCRECONFIGURATION-START
RRCReconfiguration ::= SEQUENCE {
rrc-TransactionIdentifier          RRC-TransactionIdentifier,

    criticalExtensions                  CHOICE {
        rrcReconfiguration                  RRCReconfiguration-IEs,
        criticalExtensionsFuture            SEQUENCE {}
    }
}
```

The RRCReconfiguration signaling includes a radio resource control reconfiguration (rrcReconfiguration) field, and the rrcReconfiguration field includes a radio resource control reconfiguration-information element (RRCReconfiguration-IEs). The radio resource control reconfiguration field is used to configure LRB establishment.

Further, the RRCReconfiguration-IEs field is as follows:

```
RRCReconfiguration-IEs ::= SEQUENCE {
    radioBearerConfig          RadioBearerConfig        OPTIONAL, -- Need M
    secondaryCellGroup         OCTET STRING (CONTAINING CellGroupConfig)
OPTIONAL, -- Cond SCG
    measConfig                 MeasConfig               OPTIONAL, -- Need M
    lateNonCriticalExtension   OCTET STRING             OPTIONAL,
    nonCriticalExtension       RRCReconfiguration-v1530-IEs    OPTIONAL
}
```

The radio resource control reconfiguration-information element further includes a radio bearer configuration (radioBearerConfig) field. This field is used to configure LRB establishment.

Further, the RadioBearerConfig field is as follows:

```
-- ASN1START
-- TAG-RADIOBEARERCONFIG-START
RadioBearerConfig::=        SEQUENCE {
srb-ToAddModList            SRB-ToAddModList          OPTIONAL, -- Cond HO-Conn
srb3-ToRelease              ENUMERATED{true}          OPTIONAL, -- Need N
drb-ToAddModList            DRB-ToAddModList          OPTIONAL, -- Cond HO-toNR
drb-ToReleaseList           DRB-ToReleaseList         OPTIONAL, -- Need N
lrb-ToAddModList            LRB-ToAddModList          OPTIONAL, -- Cond HO-toNR
lrb-ToReleaseList           LRB-ToReleaseList         OPTIONAL, -- Need N
securityConfig              SecurityConfig            OPTIONAL, -- Need M
...
}
```

The radio bearer configuration field includes a to-be-added LRB list (lrb-ToAddModList) and a to-be-released LRB list (lrb-ToReleaseList). The LRB-ToAddModList and LRB-ToReleaseList fields include the LRB to be established and the LRB to be released, as described above.

After receiving the RRCReconfiguration signaling, the terminal establishes or releases the LRB based on content of the LRB-ToAddModList and LRB-ToReleaseList fields.

In another possible example, when an LRB establishment procedure is used to resume a suspended RRC connection, steps are as follows. For meanings of fields that are the same as those in an existing communication standard, refer to explanations in the existing communication standard. Details are not described herein again.

The network device sends radio resource control resume (RRCResume) signaling to the terminal:

```
-- ASN1START
-- TAG-RRCRESUME-START
RRCResume ::=                          SEQUENCE {
    rrc-TransactionIdentifier       RRC-TransactionIdentifier,
      criticalExtensions               CHOICE {
          rrcResume                                RRCResume-IEs,
          criticalExtensionsFuture          SEQUENCE {}
    }
}
```

The radio resource control resume signaling includes a radio resource control resume (rrcResume) field, and the radio resource control resume field further includes a radio resource control resume-information element (RRCResume-IEs). The radio resource control resume field is used to resume a suspended RRC connection.

Further, the RRCResume-IEs field is as follows:

```
RRCResume-IEs ::=                SEQUENCE {
    radioBearerConfig                RadioBearerConfig          OPTIONAL, -- Need M
    masterCellGroup                OCTET STRING (CONTAINING CellGroupConfig)
OPTIONAL, -- Need M
    measConfig                       MeasConfig             OPTIONAL, -- Need M
    fullConfig                       ENUMERATED {true}    OPTIONAL, -- Need N
    lateNonCriticalExtension       OCTET STRING             OPTIONAL,
    nonCriticalExtension           RRCResume-v1560-IEs        OPTIONAL
}
```

The radio resource control resume-information element includes a radio bearer configuration (radioBearerConfig) field. The radio bearer configuration field further includes a radio bearer configuration (RadioBearerConfig) field.

Further, the RadioBearerConfig field is as follows:

```
-- ASN1START
-- TAG-RADIOBEARERCONFIG-START
RadioBearerConfig::=               SEQUENCE {
srb-ToAddModList                      SRB-ToAddModList             OPTIONAL, -- Cond
HO-Conn
srb3-ToRelease                      ENUMERATED{true}         OPTIONAL, -- Need N
drb-ToAddModList                      DRB-ToAddModList             OPTIONAL, -- Cond
HO-toNR
drb-ToReleaseList                   DRB-ToReleaseList          OPTIONAL, -- Need N
lrb-ToAddModList                      LRB-ToAddModList             OPTIONAL, -- Cond
HO-toNR
lrb-ToReleaseList                   LRB-ToReleaseList          OPTIONAL, -- Need N
securityConfig                        SecurityConfig             OPTIONAL, -- Need M
...
}
```

The RadioBearerConfig field includes a to-be-added LRB list (lrb-ToAddModList) and a to-be-released LRB list (lrb-ToReleaseList). The LRB-ToAddModList and LRB-ToReleaseList fields include the LRB to be established and the LRB to be released, as described above.

After receiving the RRCResume signaling, the terminal establishes or releases the LRB based on content of the LRB-ToAddModList and LRB-ToReleaseList fields. The procedure is described above.

It can be understood that, in the foregoing embodiments, the method and/or the steps implemented by the first node may be alternatively implemented by a component (for example, a chip or a circuit) that may be used for the first node, and the method and/or the steps implemented by the second node may be alternatively implemented by a component (for example, a chip or a circuit) that may be used for the second node.

The foregoing mainly describes the solutions provided in embodiments of this application from a perspective of interaction between network elements. Correspondingly, an embodiment of this application further provides a communication apparatus, and the communication apparatus is configured to implement the foregoing various methods. The communication apparatus may be the first node in the foregoing method embodiments, or may be a component that can be used for the first node; or the communication apparatus may be the second node or the first node in the foregoing method embodiments, or may be a component that can be used for the second node or the first node. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

Based on a same concept of the foregoing communication methods, this application further provides the following communication apparatus.

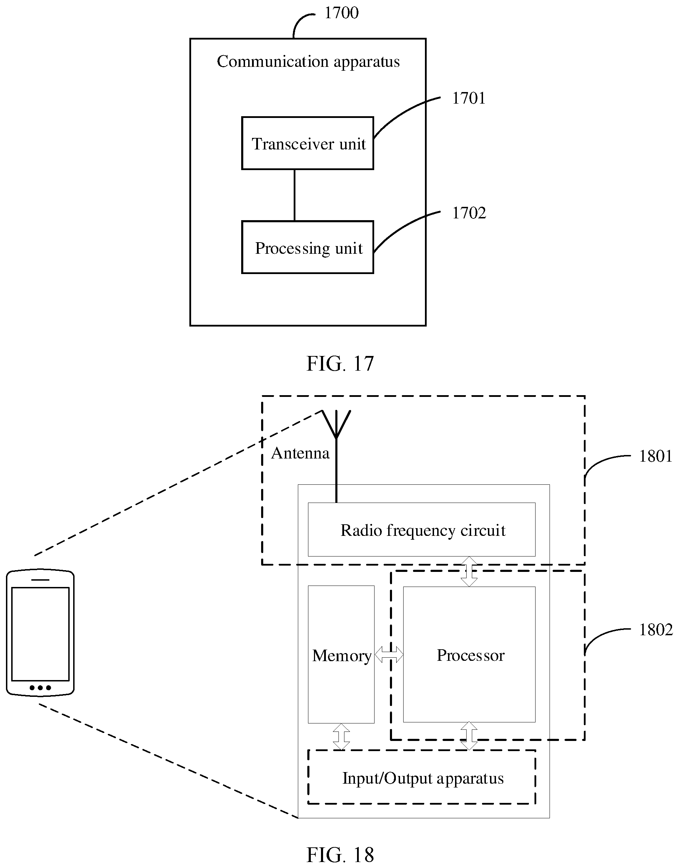

FIG. 17 is a diagram of a structure of a communication apparatus according to an embodiment of this application. The communication apparatus 1700 includes a transceiver unit 1701 and a processing unit 1702.

In an example, when the communication apparatus 1700 is configured to implement a function of the first node in the foregoing embodiments, the transceiver unit 1701 is configured to perform operations of the first node in steps S1101, S1103, and S1105 in the embodiment shown in FIG. 11, and the processing unit 1702 is configured to perform step S1104 in the embodiment shown in FIG. 11.

When the communication apparatus 1700 is configured to implement a function of the second node in the foregoing embodiments, the transceiver unit 1701 is configured to perform operations of the second node in steps S1101, S1103, and S1105 in the embodiment shown in FIG. 11, and the processing unit 1702 is configured to perform step S1102 in the embodiment shown in FIG. 11.

In another example, when the communication apparatus 1700 is configured to implement a function of the first node in the foregoing embodiments, the transceiver unit 1701 is configured to perform operations of the first node in steps S1401, S1403, and S1405 in the embodiment shown in FIG. 14, and the processing unit 1702 is configured to perform step S1404 in the embodiment shown in FIG. 14.

When the communication apparatus 1700 is configured to implement a function of the second node in the foregoing embodiments, the transceiver unit 1701 is configured to perform operations of the second node in steps S1401 and S1403 in the embodiment shown in FIG. 14, and the processing unit 1702 is configured to perform step S1402 in the embodiment shown in FIG. 14.

In still another example, when the communication apparatus 1700 is configured to implement a function of the first node in the foregoing embodiments, the transceiver unit 1701 is configured to perform operations of the first node in step S1502 in the embodiment shown in FIG. 15, and the processing unit 1702 is configured to perform step S1501 in the embodiment shown in FIG. 15.

When the communication apparatus 1700 is configured to implement a function of the second node in the foregoing embodiments, the transceiver unit 1701 is configured to perform operations of the second node in step S1502 in the embodiment shown in FIG. 15, and the processing unit 1702 is configured to perform step S1503 in the embodiment shown in FIG. 15.

The first node in the foregoing embodiments may be a terminal. FIG. 18 is a diagram of a simplified structure of the terminal. For ease of understanding and convenience of figure illustration, an example in which the terminal is a mobile phone is used in FIG. 18. As shown in FIG. 18, the terminal includes a processor, a memory, a radio frequency circuit, an antenna, and an input/output apparatus. The processor is mainly configured to: process a communication protocol and communication data, control the terminal, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminals may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal, the radio frequency circuit receives a radio frequency signal through the antenna, converts the radio frequency signal into a baseband signal, and outputs the baseband signal to the processor; and the processor converts the baseband signal into data, and processes the data. For ease of description, FIG. 18 shows only one memory and one processor. An actual terminal product may include one or more processors and one or more memories. The memory may also be referred to as a storage medium, a storage device, or the like. The memory may be disposed independently of the processor, or may be integrated with the processor. This is not limited in embodiments of this application.

In embodiments of this application, an antenna and a radio frequency circuit that have receiving and sending functions may be considered as a receiving unit and a sending unit (or collectively referred to as a transceiver unit) of the terminal, and a processor that has a processing function is considered as a processing unit of the terminal. As shown in FIG. 18, the terminal includes a transceiver unit 1801 and a processing unit 1802. The transceiver unit 1801 may also be referred to as a receiver/sender (transmitter) machine, a receiver/transmitter, a receiver/transmitter circuit, or the like. The processing unit 1802 may also be referred to as a processor, a processing board, a processing module, a processing apparatus, or the like. The transceiver unit 1801 is configured to implement a function of the transceiver unit 1701 in the embodiment shown in FIG. 17, and the processing unit 1802 is configured to implement a function of the processing unit 1702 in the embodiment shown in FIG. 17.

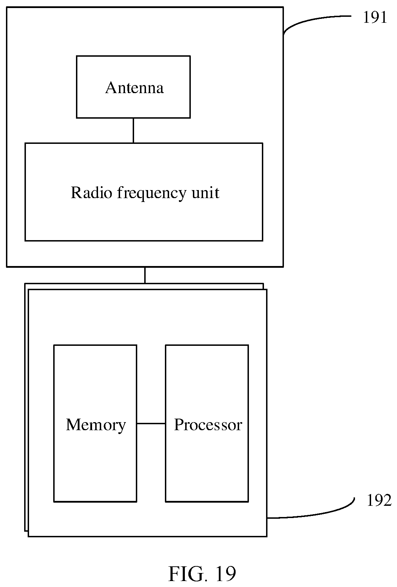

The second node in the foregoing embodiments may be a network device. FIG. 19 is a diagram of a simplified structure of the network device. The network device includes a part 192 and a part for radio frequency signal transmission/reception and conversion, and the part for radio frequency signal transmission/reception and conversion further includes a transceiver unit 191. The part for radio frequency signal transmission/reception and conversion is mainly configured to: send/receive a radio frequency signal and perform conversion between a radio frequency signal and a baseband signal. The part 192 is mainly configured to: perform baseband processing, control the network device, and the like. The transceiver unit 191 may also be referred to as a receiver/sender (transmitter) machine, a receiver/transmitter, a receiver/transmitter circuit, or the like. The part 192 is usually a control center of the network device, usually may be referred to as a processing unit, and is configured to control the network device to perform the steps performed by the second node in FIG. 11, FIG. 14, and FIG. 15 described above. For details, refer to the foregoing descriptions of the related parts. The transceiver unit 191 may be configured to implement a function of the transceiver unit 1701 in the embodiment shown in FIG. 17, and the part 192 is configured to implement a function of the processing unit 1702 in the embodiment shown in FIG. 17.

The part 192 may include one or more boards. Each board may include one or more processors and one or more memories. The processor is configured to read and execute a program in the memory to implement a baseband processing function and control the network device. If there are a plurality of boards, the boards may be interconnected to improve a processing capability. In an optional implementation, the plurality of boards may share one or more processors, or the plurality of boards share one or more memories, or the plurality of boards share one or more processors at the same time.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is enabled to perform the method in the foregoing embodiments.

An embodiment of this application further provides a communication system, including the foregoing communication apparatus.

It should be noted that one or more of the foregoing units or modules may be implemented by software, hardware, or a combination of software and hardware. When any one of the foregoing units or units is implemented by software, the software exists in a form of computer program instructions, and is stored in the memory. The processor may be configured to execute the program instructions and implement the foregoing method procedures. The processor may be built in a system on chip (system on chip, SoC) or an ASIC, or may be an independent semiconductor chip. In addition to a core that is configured to execute software instructions to perform operation or processing, the processor may further include a necessary hardware accelerator, such as a field programmable gate array (field programmable gate array, FPGA), a programmable logic device (programmable logic device, PLD), or a logic circuit that implements special logic operation.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory through the interface. When the at least one processor executes a computer program or instructions in the memory, the chip system is enabled to perform the method in any one of the foregoing method embodiments. Optionally, the chip system may include a chip, or may include a chip and another discrete device. This is not specifically limited in embodiments of this application.

It should be understood that, in the descriptions of this application, unless otherwise specified, "/" indicates an "or" relationship between associated objects. For example, A/B may indicate A or B. A and B may be singular or plural. In addition, in the descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

## Claims

**1.** A communication method, wherein the method comprises:

sending first indication information and/or second indication information, wherein the first indication information indicates dataset state information, and the second indication information indicates model state information; and
receiving third indication information, wherein the third indication information indicates a communication scheme and a communication resource, and the communication scheme and the communication resource are determined based on the first indication information and/or the second indication information.

**2.** The method according to claim 1, wherein the dataset state information comprises at least one of the following information: a data type, a sampling frequency, sampling location information, a sample timestamp, a quantity of samples, and sample precision.

**3.** The method according to claim 1, wherein the model state information comprises at least one of the following information: a model type, a model identifier, a submodel order, a model version number, a model description, a model update timestamp, model update location information, model precision, and model performance.

**4.** The method according to any one of claims 1 to 3, wherein the communication scheme is determined based on at least two of the first indication information, the second indication information, and channel state information.

**5.** The method according to claim 4, wherein the communication scheme comprises at least one of the following schemes: a quantization scheme, a source coding scheme, a modulation and coding scheme, and a joint source-channel coding scheme.

**6.** The method according to any one of claims 1 to 5, wherein the method further comprises:

reporting a size of an artificial intelligence traffic data packet, wherein
the communication resource is determined based on at least two of the size of the artificial intelligence traffic data packet, the dataset state information, and the model state information.

**7.** The method according to any one of claims 1 to 6, wherein the method further comprises:

generating the artificial intelligence traffic data packet based on the third indication information; and
sending the artificial intelligence traffic data packet based on the third indication information.

**8.** The method according to any one of claims 1 to 6, wherein the method further comprises:
receiving the artificial intelligence traffic data packet based on the third indication information.

**9.** The method according to claim 7 or 8, wherein the artificial intelligence traffic data packet is communicated through a physical learning channel.

**10.** The method according to claim 9, wherein communication through the physical learning channel comprises at least one of the following processing operations: quantization, and source coding; or

communication through the physical learning channel comprises at least one of the following processing operations: quantization, and joint source-channel coding; or
communication through the physical learning channel comprises the following processing operation: real-number processing.

**11.** The method according to any one of claims 7 to 10, wherein the artificial intelligence traffic data packet comprises a packet header and a payload, and the payload comprises at least one of the following data: a parameter or a gradient of a machine learning model, an inference result, an intermediate result of inference to a split layer, a gradient reversely transferred to the split layer, and logits.

**12.** The method according to claim 11, wherein the packet header comprises at least one of the following: content indication information, content description information, a compression mode, and a packing mode.

**13.** A communication method, wherein the method comprises:

receiving first indication information and/or second indication information, wherein the first indication information indicates dataset state information, and the second indication information indicates model state information;
determining a communication scheme and a communication resource based on the first indication information and/or the second indication information; and
sending third indication information, wherein the third indication information indicates the communication scheme and the communication resource.

**14.** The method according to claim 13, wherein the dataset state information comprises at least one of the following information: a data type, a sampling frequency, sampling location information, a sample timestamp, a quantity of samples, and sample precision.

**15.** The method according to claim 13, wherein the model state information comprises at least one of the following information: a model type, a model identifier, a submodel order, a model version number, a model description, a model update timestamp, model update location information, model precision, and model performance.

**16.** The method according to any one of claims 13 to 15, wherein the communication scheme is determined based on at least two of the first indication information, the second indication information, and channel state information.

**17.** The method according to claim 16, wherein the communication scheme comprises at least one of the following schemes: a quantization scheme, a source coding scheme, a modulation and coding scheme, and a joint source-channel coding scheme.

**18.** The method according to any one of claims 13 to 17, wherein the determining a communication resource based on the first indication information and/or the second indication information comprises:

obtaining a size of an artificial intelligence traffic data packet; and
determining the communication resource based on at least two of the size of the artificial intelligence traffic data packet, the first indication information, and the second indication information.

**19.** The method according to claim 18, wherein the obtaining a size of an artificial intelligence traffic data packet comprises:

determining the size of the artificial intelligence traffic data packet based on a correspondence between a data packet size and at least one of a task type and a service type; and
receiving the reported size of the artificial intelligence traffic data packet.

**20.** The method according to any one of claims 13 to 19, wherein the method further comprises:
receiving the artificial intelligence traffic data packet sent based on the third indication information.

**21.** The method according to any one of claims 13 to 19, wherein the method further comprises:

generating the artificial intelligence traffic data packet based on the third indication information; and
sending the artificial intelligence traffic data packet based on the third indication information.

**22.** The method according to claim 20 or 21, wherein the artificial intelligence traffic data packet is communicated through a physical learning channel.

**23.** The method according to claim 22, wherein communication through the physical learning channel comprises at least one of the following processing operations: quantization, and source coding; or

communication through the physical learning channel comprises at least one of the following processing operations: quantization, and joint source-channel coding; or
communication through the physical learning channel comprises the following processing operation: real-number processing.

**24.** The method according to any one of claims 20 to 23, wherein the artificial intelligence traffic data packet comprises a packet header and a payload, and the payload comprises at least one of the following data: a parameter or a gradient of a machine learning model, an inference result, an intermediate result of inference to a split layer, a gradient reversely transferred to the split layer, and logits.

**25.** The method according to claim 24, wherein the packet header comprises at least one of the following: content indication information, content description information, a compression mode, and a packing mode.

**26.** A communication method, wherein the method comprises:

obtaining artificial intelligence traffic data generated at a physical PHY layer and/or a medium access control MAC layer; and
sending the artificial intelligence traffic data through a first radio bearer.

**27.** The method according to claim 26, wherein the sending the artificial intelligence traffic data through a first radio bearer comprises:

processing the artificial intelligence traffic data at at least one of the following protocol layers: a packet data convergence protocol PDCP layer, a radio link control RLC layer, the MAC layer, and the PHY layer; and

sending processed artificial intelligence traffic data.

**28.** The method according to claim 26 or 27, wherein the first radio bearer is a learning radio bearer or a first data radio bearer.

**29.** The method according to any one of claims 26 to 28, wherein the method further comprises:
receiving first signaling, wherein the first signaling indicates to configure the first radio bearer.

**30.** A communication method, wherein the method comprises:

receiving artificial intelligence traffic data through a first radio bearer; and
outputting the artificial intelligence traffic data to a physical PHY layer and/or a medium access control MAC layer.

**31.** The method according to claim 30, wherein the outputting the artificial intelligence traffic data to a physical PHY layer and/or a medium access control MAC layer comprises:

processing the artificial intelligence traffic data at at least one of the following protocol layers: the PHY layer, the MAC layer, a radio link control RLC layer, and a packet data convergence protocol PDCP layer; and
transmitting processed artificial intelligence traffic data to the PHY layer and/or the MAC layer.

**32.** The method according to claim 30 or 31, wherein the first radio bearer is a learning radio bearer or a first data radio bearer.

**33.** The method according to any one of claims 30 to 32, wherein the method further comprises:
sending first signaling, wherein the first signaling indicates to configure the first radio bearer.

**34.** A communication apparatus, wherein the apparatus comprises a transceiver unit, wherein

the transceiver unit is configured to send first indication information and/or second indication information, wherein the first indication information indicates dataset state information, and the second indication information indicates model state information; and
the transceiver unit is further configured to receive third indication information, wherein the third indication information indicates a communication scheme and a communication resource, and the communication scheme and the communication resource are determined based on the first indication information and/or the second indication information.

**35.** The apparatus according to claim 34, wherein the dataset state information comprises at least one of the following information: a data type, a sampling frequency, sampling location information, a sample timestamp, a quantity of samples, and sample precision.

**36.** The apparatus according to claim 34, wherein the model state information comprises at least one of the following information: a model type, a model identifier, a submodel order, a model version number, a model description, a model update timestamp, model update location information, model precision, and model performance.

**37.** The apparatus according to any one of claims 34 to 36, wherein the communication scheme is determined based on at least two of the first indication information, the second indication information, and channel state information.

**38.** The apparatus according to claim 37, wherein the communication scheme comprises at least one of the following schemes: a quantization scheme, a source coding scheme, a modulation and coding scheme, and a joint source-channel coding scheme.

**39.** The apparatus according to any one of claims 34 to 38, wherein the transceiver unit is further configured to report a size of an artificial intelligence traffic data packet, wherein
the communication resource is determined based on at least two of the size of the artificial intelligence traffic data packet, the dataset state information, and the model state information.

**40.** The apparatus according to any one of claims 34 to 39, wherein the apparatus further comprises a processing unit, wherein

the processing unit is configured to generate the artificial intelligence traffic data packet based on the third indication information; and
the transceiver unit is further configured to send the artificial intelligence traffic data packet based on the third indication information.

**41.** The apparatus according to any one of claims 34 to 39, wherein the transceiver unit is further configured to receive the artificial intelligence traffic data packet based on the third indication information.

**42.** The apparatus according to claim 40 or 41, wherein the artificial intelligence traffic data packet is communicated through a physical learning channel.

**43.** The apparatus according to claim 42, wherein communication through the physical learning channel comprises at least one of the following processing operations: quantization, and source coding; or

communication through the physical learning channel comprises at least one of the following processing operations: quantization, and joint source-channel coding; or
communication through the physical learning channel comprises the following processing operation: real-number processing.

**44.** The apparatus according to any one of claims 40 to 43, wherein the artificial intelligence traffic data packet comprises a packet header and a payload, and the payload comprises at least one of the following data: a parameter or a gradient of a machine learning model, an inference result, an intermediate result of inference to a split layer, a gradient reversely transferred to the split layer, and logits.

**45.** The apparatus according to claim 44, wherein the packet header comprises at least one of the following: content indication information, content description information, a compression mode, and a packing mode.

**46.** A communication apparatus, wherein the apparatus comprises a transceiver unit and a processing unit, wherein

the transceiver unit is configured to receive first indication information and/or second indication information, wherein the first indication information indicates dataset state information, and the second indication information indicates model state information;
the processing unit is configured to determine a communication scheme and a communication resource based on the first indication information and/or the second indication information; and
the transceiver unit is further configured to send third indication information, wherein the third indication information indicates the communication scheme and the communication resource.

**47.** The apparatus according to claim 46, wherein the dataset state information comprises at least one of the following information: a data type, a sampling frequency, sampling location information, a sample timestamp, a quantity of samples, and sample precision.

**48.** The apparatus according to claim 46, wherein the model state information comprises at least one of the following information: a model type, a model identifier, a submodel order, a model version number, a model description, a model update timestamp, model update location information, model precision, and model performance.

**49.** The apparatus according to any one of claims 46 to 48, wherein the communication scheme is determined based on at least two of the first indication information, the second indication information, and channel state information.

**50.** The apparatus according to claim 49, wherein the communication scheme comprises at least one of the following schemes: a quantization scheme, a source coding scheme, a modulation and coding scheme, and a joint source-channel coding scheme.

**51.** The apparatus according to any one of claims 46 to 50, wherein the processing unit is further configured to obtain a size of an artificial intelligence traffic data packet; and
the processing unit is further configured to determine the communication resource based on at least two of the size of the artificial intelligence traffic data packet, the first indication information, and the second indication information.

**52.** The apparatus according to claim 51, wherein the processing unit is further configured to determine the size of the artificial intelligence traffic data packet based on a correspondence between a data packet size and at least one of a task type and a service type; or
the transceiver unit is further configured to receive the reported size of the artificial intelligence traffic data packet.

**53.** The apparatus according to any one of claims 46 to 52, wherein the transceiver unit is further configured to receive the artificial intelligence traffic data packet sent based on the third indication information.

**54.** The apparatus according to any one of claims 46 to 52, wherein the processing unit is configured to generate the artificial intelligence traffic data packet based on the third indication information; and
the transceiver unit is further configured to send the artificial intelligence traffic data packet based on the third indication information.

**55.** The apparatus according to claim 53 or 54, wherein the artificial intelligence traffic data packet is communicated through a physical learning channel.

**56.** The apparatus according to claim 55, wherein communication through the physical learning channel comprises at least one of the following processing operations: quantization, and source coding; or

communication through the physical learning channel comprises at least one of the following processing operations: quantization, and joint source-channel coding; or
communication through the physical learning channel comprises the following processing operation: real-number processing.

**57.** The apparatus according to any one of claims 53 to 56, wherein the artificial intelligence traffic data packet comprises a packet header and a payload, and the payload comprises at least one of the following data: a parameter or a gradient of a machine learning model, an inference result, an intermediate result of inference to a split layer, a gradient reversely transferred to the split layer, and logits.

**58.** The apparatus according to claim 57, wherein the packet header comprises at least one of the following: content indication information, content description information, a compression mode, and a packing mode.

**59.** A communication apparatus, wherein the apparatus comprises a processing unit and a transceiver unit, wherein

the processing unit is configured to obtain artificial intelligence traffic data generated at a physical PHY layer and/or a medium access control MAC layer; and
the transceiver unit is configured to send the artificial intelligence traffic data through a first radio bearer.

**60.** The apparatus according to claim 59, wherein the processing unit is further configured to process the artificial intelligence traffic data at at least one of the following protocol layers: a packet data convergence protocol PDCP layer, a radio link control RLC layer, the MAC layer, and the PHY layer; and
the transceiver unit is further configured to send processed artificial intelligence traffic data.

**61.** The apparatus according to claim 59 or 60, wherein the first radio bearer is a learning radio bearer or a first data radio bearer.

**62.** The apparatus according to any one of claims 59 to 61, wherein the transceiver unit is further configured to receive first signaling, wherein the first signaling indicates to configure the first radio bearer.

**63.** A communication apparatus, wherein the apparatus comprises a transceiver unit and a processing unit, wherein

the transceiver unit is configured to receive artificial intelligence traffic data through a first radio bearer; and
the processing unit is configured to output the artificial intelligence traffic data to a physical PHY layer and/or a medium access control MAC layer.

**64.** The apparatus according to claim 63, wherein the processing unit is further configured to process the artificial intelligence traffic data at at least one of the following protocol layers: the PHY layer, the MAC layer, a radio link control RLC layer, and a packet data convergence protocol PDCP layer; and
the processing unit is further configured to transmit processed artificial intelligence traffic data to the PHY layer and/or the MAC layer.

**65.** The apparatus according to claim 63 or 64, wherein the first radio bearer is a learning radio bearer or a first data radio bearer.

**66.** The apparatus according to any one of claims 63 to 65, wherein the transceiver unit is further configured to send first signaling, wherein the first signaling indicates to configure the first radio bearer.

**67.** A communication system, comprising the communication apparatus according to any one of claims 34 to 45 and the communication apparatus according to any one of claims 46 to 58.

**68.** A communication system, comprising the communication apparatus according to any one of claims 59 to 62 and the communication apparatus according to any one of claims 63 to 66.

**69.** A communication apparatus, comprising a processor, configured to execute a program stored in a memory, wherein when the program is executed, the apparatus is enabled to perform the method according to any one of claims 1 to 33.

**70.** The apparatus according to claim 69, wherein the memory is located outside the apparatus.

**71.** A communication apparatus, comprising a processor, a memory, and instructions that are stored in the memory and that can be run on the processor, wherein when the instructions are run, the communication apparatus is enabled to perform the method according to any one of claims 1 to 33.

**72.** A computer-readable storage medium, comprising instructions, wherein when the instructions are run on a computer, the method according to any one of claims 1 to 33 is performed.

**73.** A computer program product, wherein when the computer program product runs on a computer, the method according to any one of claims 1 to 33 is performed.

102
Second node
First node
First node
101
101

FIG. 1

Network device
Terminal
Terminal

FIG. 2

202
Second node
First node
Third node
201
203

FIG. 3

41
Network device
411
Processor
412
Memory
Computer program code
413
Transceiver
Transmitter
4131
4132
Receiver
4133
40
Terminal
401
Processor
402
Memory
Computer program code
403
Transceiver
Transmitter
4031
4032
Receiver
4033

FIG. 4

Central node
$G_n$
$W$
$G_k$
$W$
$G_m$
$W$
Distributed node $n$
Distributed node $k$
Distributed node $m$

FIG. 5

$F_1$
$G_1$
$F_2$
$G_2$
$F_3$
$G_3$

FIG. 6

L1
O1
L2
O2
L3
O3
A
B
C

FIG. 7

QoS flow
SDAP
DRB
PDCP
RLC channel
RLC
Logical channel
MAC
Transmission channel
PHY
Physical channel
Radio frequency

FIG. 8

BCH
PCH
DL-SCH
RACH
UL-SCH
DCI
UCI
PBCH
PDCCH
PDSCH
PRACH
PUCCH
PUSCH

FIG. 9

Channel coding
Rate matching
Scrambling
Modulation
Layer mapping
Precoding
Resource mapping
Signal generation

FIG. 10

First node
Second node
S1101: First indication information and/or second indication information (the first indication information indicates dataset state information, and the second indication information indicates model state information)
S1102: Determine a communication scheme and a communication resource based on the first indication information and/or the second indication information
S1103: Third indication information (indicating the communication scheme and the communication resource)
S1104: Generate an artificial intelligence traffic data packet based on the third indication information
S1105: Send the artificial intelligence traffic data packet based on the third indication information

FIG. 11

BCH
PBCH
PCH
DCI
PDCCH
DL-SCH
PDSCH
Artificial intelligence traffic data
PDLCH/ PBLCH
RACH
PRACH
UCI
PUCCH
UL-SCH
PUSCH
Artificial intelligence traffic data
PULCH

FIG. 12

Quantization
Source coding
Channel coding
Rate matching
Scrambling
Modulation
Layer mapping
Precoding
Resource mapping
Signal generation

FIG. 13a

Quantization
Joint source-channel coding
Rate matching
Scrambling
Modulation
Layer mapping
Precoding
Resource mapping
Signal generation

FIG. 13b

Real-number or complex-number processing
Layer mapping
Precoding
Resource mapping
Signal generation
Third node
First node
Second node
S1401: First indication information and/or second indication information (the first indication information indicates dataset state information, and the second indication information indicates model state information)
S1402: Determine a communication scheme and a communication resource based on the first indication information and/or the second indication information
S1403: Third indication information (indicating the communication scheme and the communication resource)
S1404: Generate an artificial intelligence traffic data packet based on the third indication information
S1405: Send the artificial intelligence traffic data packet based on the third indication information

FIG. 13c

FIG. 14

First node
Second node
S1501: Obtain artificial intelligence traffic data generated at a physical layer and/or a MAC layer
S1502: Send the artificial intelligence traffic data through a first radio bearer
S1503: Output the artificial intelligence traffic data to the physical layer and/or the MAC layer

FIG. 15

QoS flow
SDAP
DRB
First radio bearer
PDCP
RLC channel
ATC
RLC
Logical channel
MAC
Artificial intelligence traffic data
Transmission channel
PHY
Physical channel
Radio frequency

FIG. 16

1700
Communication apparatus
1701
Transceiver unit
1702
Processing unit

FIG. 17

Antenna
1801
Radio frequency circuit
1802
Memory
Processor
Input/Output apparatus

FIG. 18

191
Antenna
Radio frequency unit
Memory
Processor
192

FIG. 19

## INTERNATIONAL SEARCH REPORT

International application No.
**PCT/CN2022/120568**

**A. CLASSIFICATION OF SUBJECT MATTER**

H04W72/04(2023.01)i;H04W72/12(2023.01)i;H04W80/12(2009.01)i;H04W80/08(2009.01)i;G06N3/00(2023.01)i

According to International Patent Classification (IPC) or to both national classification and IPC

**B. FIELDS SEARCHED**

Minimum documentation searched (classification system followed by classification symbols)

IPC:H04W,G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 人工智能, 通信协议, 模型, 资源, 策略, 链路, 信道, 机器学习, 无线, 物理层, 媒体接入控制层, 分组数据汇聚协议层, 无线链路控制层, AI, protocol, model, resource, policy, link, channel, machine learning, wireless, PHY, MAC, RLC, PDCP

**C. DOCUMENTS CONSIDERED TO BE RELEVANT**

| Category* | Citation of document, with indication, where appropriate, of the relevant passages | Relevant to claim No. |
|---|---|---|
| Y | CN 111865502 A (HUAWEI TECHNOLOGIES CO., LTD.) 30 October 2020 (2020-10-30) claims 1-4 | 1-25, 34-58, 67, 69-73 |
| Y | CN 114747277 A (QUALCOMM INC.) 12 July 2022 (2022-07-12) description, paragraphs 0042-0050 | 1-25, 34-58, 67, 69-73 |
| X | CN 114302506 A (CHINA UNITED NETWORK COMMUNICATIONS GROUP CO., LTD.) 08 April 2022 (2022-04-08) description, paragraphs 67, 72, and 104 | 26-33, 59-66, 68-73 |
| A | CN 113950057 A (BEIJING SAMSUNG COMMUNICATION TECHNOLOGY RESEARCH CO., LTD. et al.) 18 January 2022 (2022-01-18) entire document | 1-73 |
| A | CN 114915983 A (SPREADTRUM COMMUNICATIONS (SHANGHAI) CO., LTD.) 16 August 2022 (2022-08-16) entire document | 1-73 |
| A | US 2022095366 A1 (LG ELECTRONICS INC.) 24 March 2022 (2022-03-24) entire document | 1-73 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 April 2023** | **09 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2022/120568**

| Patent document cited in search report | Publication date (day/month/year) | Patent family member(s) | Publication date (day/month/year) |
|---|---|---|---|
| CN 111865502 A | 30 October 2020 | None | |
| CN 114747277 A | 12 July 2022 | US 2021185700 A1 | 17 June 2021 |
| | | EP 4074118 A1 | 19 October 2022 |
| | | WO 2021119651 A1 | 17 June 2021 |
| | | IN 202227025860 A | 05 August 2022 |
| CN 114302506 A | 08 April 2022 | None | |
| CN 113950057 A | 18 January 2022 | WO 2022015077 A1 | 20 January 2022 |
| | | US 2022247634 A1 | 04 August 2022 |
| CN 114915983 A | 16 August 2022 | WO 2022166886 A1 | 16 August 2022 |
| US 2022095366 A1 | 24 March 2022 | EP 4022966 A1 | 06 July 2022 |
| | | JP 2023500536 A | 06 January 2023 |
| | | WO 2021091339 A1 | 14 May 2021 |
| | | US 2022248454 A1 | 04 August 2022 |
| | | CN 114651472 A | 21 June 2022 |

Form PCT/ISA/210 (patent family annex) (July 2022)